# EUROPEAN PATENT APPLICATION

(11) **EP 4 425 478 A1**
(43) Date of publication of application: **04.09.2024**
(21) Application number: 22886460.9
(22) Date of filing: 06.09.2022
(51) Int. Cl.: G09G 5/00, B60R 11/02, G09G 5/02, G09G 5/38

(54) **INFORMATION PROCESSING DEVICE, INFORMATION PROCESSING METHOD, PROGRAM, AND INFORMATION PROCESSING SYSTEM**

(30) Priority: 25.10.2021 JP 2021173885
(71) Applicant: Sony Group Corporation, Tokyo 108-0075 (JP)
(72) Inventor: HAYASHI, Maho, Tokyo 108-0075 (JP); TAKAYAMA, Yuya, Tokyo 108-0075 (JP); IKEDA, Tetsuo, Tokyo 108-0075 (JP)
(74) Representative: Witte, Weller & Partner Patentanwälte mbB
(86) International application number: PCT/JP2022/033351
(87) International publication number: WO 2023/074126

(57) **Abstract**

An information processing apparatus (90) includes an environment information processing unit (91) and an optimization processing unit (92). The environment information processing unit (91) predicts a transition of an environment outside a vehicle during viewing of a content. The optimization processing unit (92) determines a drawing method of the content based on the predicted transition of the environment outside the vehicle.

## Description

### Field

The present invention relates to an information processing apparatus, an information processing method, a program, and an information processing system.

### Background

An in-vehicle display that displays a content on a windshield or the like is known. In this type of display, a content is superimposed on a traveling landscape outside the vehicle. Depending on a drawing position of the content and a drawing color thereof, there is a possibility that the content is mixed in the traveling landscape. Therefore, Patent Literature 1 proposes that the drawing color of the content is appropriately controlled depending on the traveling landscape so as to easily identify the content from the background.

### Citation List

### Patent Literature

Patent Literature 1: JP 2019-162932 A

### Summary

### Technical Problem

In the conventional method, a drawing color of a content is appropriately changed depending on a changing traveling landscape. However, there is a possibility that visibility of the content deteriorates due a frequent change in the drawing color.

Therefore, the present disclosure proposes an information processing apparatus, an information processing method, a program, and an information processing system capable of suppressing deterioration in visibility of a content due to a change in environment outside a vehicle.

### Solution to Problem

According to the present disclosure, an information processing apparatus is provided that comprises: an environment information processing unit configured to predict a transition of an environment outside a vehicle during viewing of a content; and
an optimization processing unit configured to determine a drawing method of the content based on the predicted transition of the environment outside the vehicle. According to the present disclosure, an information processing method in which an information process of the information processing apparatus is executed by a computer, a program causing a computer to perform the information process of the information processing apparatus, and an information processing system having a video display unit configured to draw the content based on the drawing method determined by the information processing apparatus, are provided.

### Brief Description of Drawings

FIG. 1 is a diagram illustrating an outline of display control of a content.
FIG. 2 is a block diagram illustrating a configuration example of a vehicle control system.
FIG. 3 is a diagram illustrating an example of a sensing region of an external recognition sensor.
FIG. 4 is a diagram illustrating a configuration example of an in-vehicle sensor and a video display unit.
FIG. 5 is a diagram illustrating a display example of a video provided as a content.
FIG. 6 is a diagram illustrating another configuration example of the video display unit.
FIG. 7 is a diagram illustrating a display example of a video provided as a content.
FIG. 8 is a diagram illustrating another configuration example of the video display unit.
FIG. 9 is a diagram illustrating an example of a functional configuration related to video display of a vehicle.
FIG. 10 is a diagram illustrating an example of a control flow related to determination processing of a drawing method.
FIG. 11 is a diagram illustrating a display example of a content on a transparent screen.
FIG. 12 is a diagram illustrating a display example in a case where the sun is directly viewed through the transparent screen.
FIG. 13 is a diagram illustrating a display example of a content on a non-transparent screen.
FIG. 14 is a diagram illustrating the display example of the content on the non-transparent screen.
FIG. 15 is an explanatory diagram of a prediction period during which a transition of an environment outside the vehicle is predicted.
FIG. 16 is a flowchart illustrating determination processing of a drawing method.
FIG. 17 is a diagram illustrating a table used for the determination processing of the drawing method.
FIG. 18 is a flow illustrating a specific example of a determination method of a drawing position for each time.
FIG. 19 is a flow illustrating a specific example of a determination method of a drawing color for each time.
FIG. 20 is a flow illustrating a specific example of optimization by statistical processing.
FIG. 21 is a diagram illustrating change processing of the drawing method.
FIG. 22 is a diagram illustrating an example of changing the drawing method according to a surrounding situation of the vehicle.
FIG. 23 is a diagram illustrating an example of changing the drawing method according to the surrounding situation of the vehicle.
FIG. 24 is a diagram illustrating an example of a flow of a countermeasure against visually induced motion sickness.
FIG. 25 is a diagram illustrating an example of changing a drawing method according to a viewing environment in the vehicle.
FIG. 26 is a diagram illustrating an example of a flow of a countermeasure against opening and closing of a window.
FIG. 27 is a diagram illustrating determination processing of a drawing method without prediction of a transition of the environment outside the vehicle.
FIG. 28 is a flowchart illustrating the determination processing of the drawing method without prediction of the transition of the environment outside the vehicle.
FIG. 29 is a diagram illustrating a determination method of a drawing color in consideration of a content.
FIG. 30 is a diagram illustrating response to a light source other than the sun.
FIG. 31 is a flowchart illustrating determination processing of a drawing method based on a movement situation of a light source.

### Description of Embodiments

Hereinafter, embodiments of the present disclosure will be described in detail with reference to the drawings. In the following embodiments, the same parts will be denoted by the same reference numerals, and a redundant description thereof will be omitted.

It is noted that a description will be given in the following order.
[1. Outline of display control of content]
[2. Configuration example of vehicle control system]
[3. Sensing region of external recognition sensor]
[4. Configuration example of video display unit]
[5. Functional configuration related to video display]
[6. Control flow]
[7. Display control example]
   [7-1. Display of content on transparent screen]
   [7-2. Superimposition avoidance with sun]
   [7-3. Display of content on non-transparent screen]
   [7-4. Optimization of drawing method based on prediction of transition of environment outside vehicle]
      [7-4-1. Prediction period]
      [7-4-2. Determination of drawing method]
      [7-4-3. Specific example of drawing position and drawing color]
   [7-5. Change of drawing method]
      [7-5-1. Countermeasure against visually induced motion sickness]
      [7-5-2. Countermeasure against shape change of projection target]
   [7-6. Determination of drawing method without prediction]
   [7-7. Determination of drawing color in consideration of content]
   [7-8. Response to light source other than sun]
[8. Effects]

### [1. Outline of display control of content]

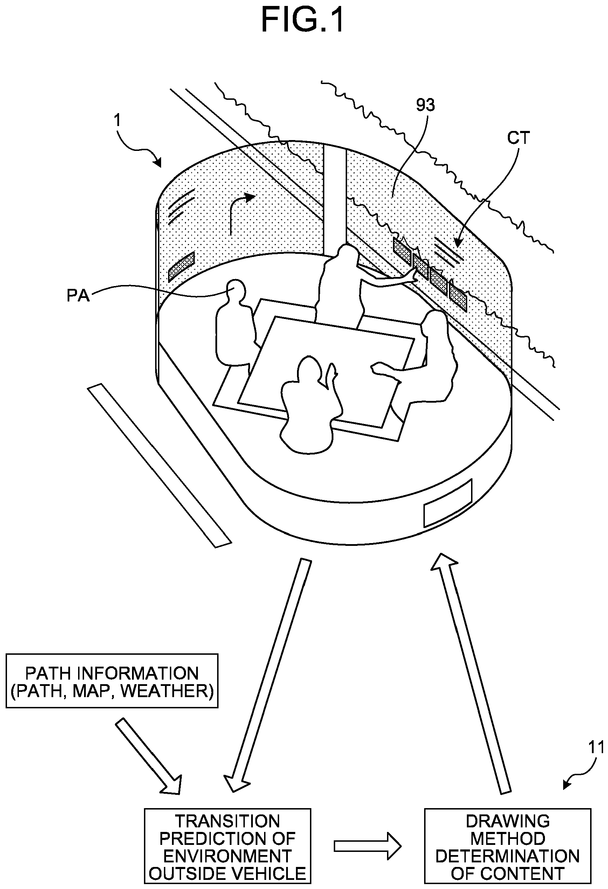

FIG. 1 is a diagram illustrating an outline of display control of a content CT.

A vehicle 1 includes a vehicle control system 11 capable of performing display control of the content CT. A passenger PA can enjoy various contents CT displayed on a video display unit 93. The content CT includes not only a content for driving assistance but also a content for entertainment intended to entertain the passenger PA. Examples of the content CT for entertainment include a movie, music, a game, news, a mail, a map/tourist guide, an SNS, and a chat.

For example, the video display unit 93 can switch between a display state and a transparent state. The video display unit 93 is disposed so as to surround a vehicle interior space along an inner wall or a partition wall of the vehicle 1. The video display unit 93 presents the content CT in the display state, and causes the passenger PA to see through the outside of the vehicle in the transparent state.

The "display state" includes a semi-transparent state in which information such as a video displayed on a scene outside the vehicle can be superimposed, such as augmented reality (AR). The video display unit 93 can perform AR display by superimposing the video on the scene outside the vehicle. For example, the video display unit 93 adjusts display brightness or transparency or haze of the video display unit 93 according to brightness outside the vehicle. Accordingly, visibility of the content CT can be enhanced.

The vehicle control system 11 acquires path information on a travel path of the vehicle 1. The path information includes a movement path, a map around the movement path, and weather information. Based on the path information, the vehicle control system 11 predicts how the environment outside the vehicle transitions while the content CT is viewed. The vehicle control system 11 calculates, based on a predetermined standard, a drawing condition (an appropriate drawing condition) suitable for the environment outside the vehicle for each time. The drawing condition includes a drawing position and a drawing color. The vehicle control system 11 determines a stable drawing method (an optimum drawing condition) by performing statistical processing on the appropriate drawing condition for each time.

### [2. Configuration example of vehicle control system]

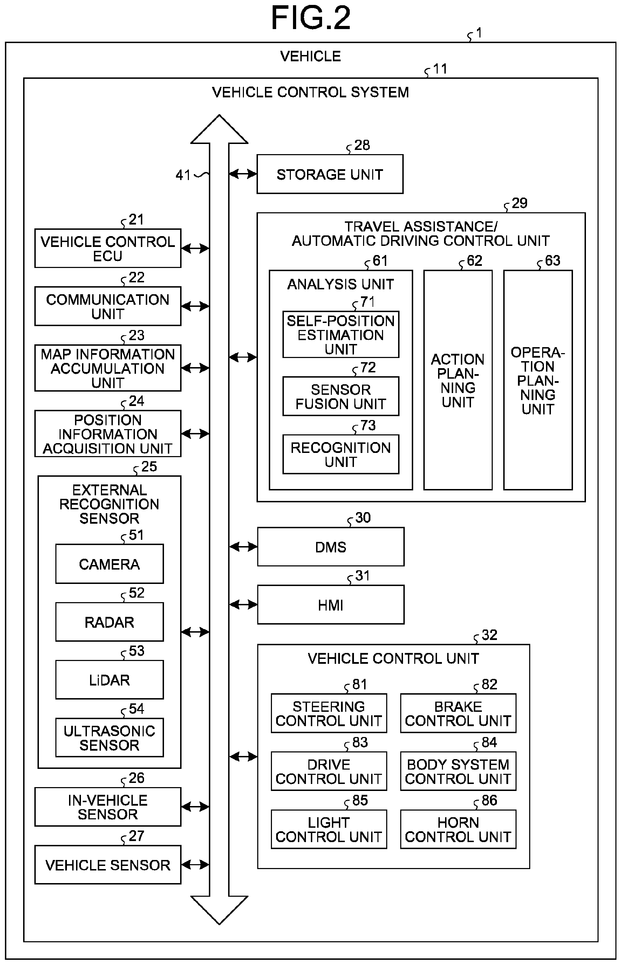

FIG. 2 is a block diagram illustrating a configuration example of the vehicle control system 11.

The vehicle control system 11 is provided in the vehicle 1 and performs processing related to travel assistance and automatic driving of the vehicle 1.

The vehicle control system 11 includes a vehicle control electronic control unit (ECU) 21, a communication unit 22, a map information accumulation unit 23, a position information acquisition unit 24, an external recognition sensor 25, an in-vehicle sensor 26, a vehicle sensor 27, a storage unit 28, a travel assistance/automatic driving control unit 29, a driver monitoring system (DMS) 30, a human machine interface (HMI) 31, and a vehicle control unit 32.

The vehicle control ECU 21, the communication unit 22, the map information accumulation unit 23, the position information acquisition unit 24, the external recognition sensor 25, the in-vehicle sensor 26, the vehicle sensor 27, the storage unit 28, the travel assistance/automatic driving control unit 29, the driver monitoring system (DMS) 30, the human machine interface (HMI) 31, and the vehicle control unit 32 are communicably connected to each other via a communication network 41. The communication network 41 includes, for example, an in-vehicle communication network, a bus, or the like conforming to a digital bidirectional communication standard such as a controller area network (CAN), a local interconnect network (LIN), a local area network (LAN), FlexRay (registered trademark), or Ethernet (registered trademark). The communication network 41 may be selectively used depending on the type of data to be transmitted. For example, the CAN may be applied to data related to vehicle control, and the Ethernet may be applied to large-capacity data. It is noted that each unit of the vehicle control system 11 may be directly connected not via the communication network 41 but by using wireless communication that assumes communication at a relatively short distance, such as near field communication (NFC) or Bluetooth (registered trademark).

It is noted that, hereinafter, when each unit of the vehicle control system 11 performs communication via the communication network 41, a description of the communication network 41 will be omitted. For example, when the vehicle control ECU 21 and the communication unit 22 perform communication via the communication network 41, it is simply described that the vehicle control ECU 21 and the communication unit 22 perform communication.

The vehicle control ECU 21 includes, for example, various processors such as a central processing unit (CPU) and a micro processing unit (MPU). The vehicle control ECU 21 controls a whole or a part of the functions of the vehicle control system 11.

The communication unit 22 communicates with various devices inside and outside the vehicle, other vehicles, servers, base stations, and the like, and transmits and receives various data. At this time, the communication unit 22 can perform communication using a plurality of communication methods.

Communication with the outside of the vehicle executable by the communication unit 22 will be schematically described. The communication unit 22 communicates with a server (hereinafter, referred to as an external server) or the like existing on an external network via a base station or an access point by a wireless communication method such as a 5th generation mobile communication system (5G), long term evolution (LTE), or dedicated short range communications (DSRC). The external network with which the communication unit 22 performs communication is, for example, the Internet, a cloud network, a network unique to a company, or the like. The communication method performed by the communication unit 22 with respect to the external network is not particularly limited as long as the communication method is a wireless communication method capable of performing digital bidirectional communication at a communication speed equal to or higher than a predetermined speed and at a distance equal to or longer than a predetermined distance.

Furthermore, for example, the communication unit 22 can communicate with a terminal existing in the vicinity of the host vehicle using a peer to peer (P2P) technology. The terminal existing in the vicinity of the host vehicle is, for example, a terminal worn by a moving body moving at a relatively low speed such as a pedestrian or a bicycle, a terminal installed in a store or the like with a fixed position, or a machine type communication (MTC) terminal. Furthermore, the communication unit 22 can also perform V2X communication. The V2X communication refers to, for example, communication between a host vehicle and another vehicle, such as vehicle to vehicle communication, that is, communication between the host vehicle and another vehicle, vehicle to infrastructure communication, that is, communication between the host vehicle and a roadside device or the like, vehicle to home communication, that is, communication between the host vehicle and home, and vehicle to pedestrian communication, that is, communication between the host vehicle and a terminal or the like possessed by a pedestrian.

For example, the communication unit 22 can receive a program for updating software for controlling the operation of the vehicle control system 11 from the outside (Over The Air). The communication unit 22 can further receive map information, traffic information, information around the vehicle 1, and the like from the outside. Furthermore, for example, the communication unit 22 can transmit information regarding the vehicle 1, the information around the vehicle 1, and the like to the outside. Examples of the information on the vehicle 1 transmitted to the outside by the communication unit 22 include data indicating the state of the vehicle 1, a recognition result by a recognition unit 73, and the like. Furthermore, for example, the communication unit 22 performs communication corresponding to a vehicle emergency call system such as an eCall.

For example, the communication unit 22 receives an electromagnetic wave transmitted by a road traffic information communication system (vehicle information and communication system (VICS) (registered trademark)) such as a radio wave beacon, an optical beacon, or FM multiplex broadcasting.

Communication with the inside of the vehicle executable by the communication unit 22 will be schematically described. The communication unit 22 can communicate with each device in the vehicle using, for example, wireless communication. The communication unit 22 can perform wireless communication with an in-vehicle device by a communication method capable of performing digital bidirectional communication at a predetermined communication speed or higher by wireless communication, such as wireless LAN, Bluetooth, NFC, or wireless USB (WUSB). The present invention is not limited thereto, and the communication unit 22 can also communicate with each device in the vehicle using wired communication. For example, the communication unit 22 can communicate with each device in the vehicle by wired communication via a cable connected to a connection terminal (not illustrated). The communication unit 22 can communicate with each device in the vehicle by a communication method capable of performing digital bidirectional communication at a predetermined communication speed or higher by wired communication, such as universal serial bus (USB), high-definition multimedia interface (HDMI) (registered trademark), or mobile high-definition link (MHL).

Here, the in-vehicle device refers to, for example, a device that is not connected to the communication network 41 in the vehicle. As the in-vehicle device, for example, a mobile device or a wearable device possessed by the passenger PA such as a driver, an information device brought into the vehicle and temporarily installed, or the like is assumed.

The map information accumulation unit 23 accumulates one or both of a map acquired from the outside and a map created by the vehicle 1. For example, the map information accumulation unit 23 accumulates a three-dimensional highly accurate map, a global map having lower accuracy than the highly accurate map and covering a wide area, and the like.

The highly accurate map is, for example, a dynamic map, a point cloud map, a vector map, or the like. The dynamic map is, for example, a map including four layers of dynamic information, semi-dynamic information, semi-static information, and static information, and is provided to the vehicle 1 from an external server or the like. The point cloud map is a map including point clouds (point cloud data). The vector map is, for example, a map in which traffic information such as a lane and a position of a traffic light is associated with a point cloud map and adapted to an advanced driver assistance system (ADAS) or autonomous driving (AD).

The point cloud map and the vector map may be provided from, for example, an external server or the like, or may be created by the vehicle 1 as a map for performing matching with a local map to be described later based on a sensing result by a camera 51, a radar 52, a LiDAR 53, or the like, and may be accumulated in the map information accumulation unit 23. In addition, in a case where the highly accurate map is provided from an external server or the like, for example, map data of several hundred meters square regarding a planned path on which the vehicle 1 travels from now is acquired from the external server or the like in order to reduce the communication capacity.

The position information acquisition unit 24 receives a global navigation satellite system (GNSS) signal from a GNSS satellite, and acquires position information of the vehicle 1. The acquired position information is supplied to the travel assistance/automatic driving control unit 29. It is noted that the position information acquisition unit 24 is not limited to the method using the GNSS signal, and may acquire the position information using, for example, a beacon.

The external recognition sensor 25 includes various sensors used for recognizing a situation outside the vehicle 1, and supplies sensor data from each sensor to each unit of the vehicle control system 11. The type and number of sensors provided in the external recognition sensor 25 are freely selected.

For example, the external recognition sensor 25 includes the camera 51, the radar 52, the light detection and ranging, laser imaging detection and ranging (LiDAR) 53, and an ultrasonic sensor 54. The present invention is not limited thereto, and the external recognition sensor 25 may be configured to include one or more types of sensors among the camera 51, the radar 52, the LiDAR 53, and the ultrasonic sensor 54. The numbers of the cameras 51, the radars 52, the LiDAR 53, and the ultrasonic sensors 54 are not particularly limited as long as they can be practically installed in the vehicle 1. Furthermore, the type of sensor provided in the external recognition sensor 25 is not limited to this example, and the external recognition sensor 25 may include another type of sensor. An example of a sensing region of each sensor provided in the external recognition sensor 25 will be described later.

It is noted that a photographing method of the camera 51 is not particularly limited. For example, cameras of various photographing methods such as a time of flight (ToF) camera, a stereo camera, a monocular camera, and an infrared camera, which are photographing methods capable of performing distance measurement, can be applied to the camera 51 as necessary. The present invention is not limited thereto, and the camera 51 may simply acquire a captured image regardless of distance measurement.

Furthermore, for example, the external recognition sensor 25 can include an environment sensor for detecting the environment of the vehicle 1. The environment sensor is a sensor for detecting an environment such as climate, weather, and brightness, and can include various sensors such as a raindrop sensor, a fog sensor, a sunshine sensor, a snow sensor, and an illuminance sensor.

Furthermore, for example, the external recognition sensor 25 includes a microphone used for detecting a sound around the vehicle 1, a position of a sound source, and the like.

The in-vehicle sensor 26 includes various sensors for detecting information inside the vehicle, and supplies sensor data from each sensor to each unit of the vehicle control system 11. The type and number of various sensors included in the in-vehicle sensor 26 are not particularly limited as long as they are types and numbers that can be practically installed in the vehicle 1.

For example, the in-vehicle sensor 26 can include one or more sensors among a camera, a radar, a seating sensor, a steering wheel sensor, a microphone, and a biological sensor. As a camera included in the in-vehicle sensor 26, for example, cameras having various photographing methods capable of measuring a distance, such as a ToF camera, a stereo camera, a monocular camera, and an infrared camera, can be used. The present invention is not limited thereto, and the camera included in the in-vehicle sensor 26 may simply acquire a captured image regardless of distance measurement. The biological sensor included in the in-vehicle sensor 26 is provided, for example, on a seat, a steering wheel, or the like, and detects various types of biological information of a passenger such as a driver.

The vehicle sensor 27 includes various sensors for detecting the state of the vehicle 1, and supplies sensor data from each sensor to each unit of the vehicle control system 11. The type and number of various sensors included in the vehicle sensor 27 are not particularly limited as long as they are types and numbers that can be practically installed in the vehicle 1.

For example, the vehicle sensor 27 includes a speed sensor, an acceleration sensor, an angular velocity sensor (a gyro sensor), and an inertial measurement unit (IMU) integrating these sensors. For example, the vehicle sensor 27 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 27 includes a rotation sensor that detects the rotation speed of an engine or a motor, an air pressure sensor that detects air pressure of a tire, a slip rate sensor that detects a slip rate of a tire, and a wheel speed sensor that detects the rotation speed of a wheel. For example, the vehicle sensor 27 includes a battery sensor that detects a remaining amount and a temperature of a battery, and an impact sensor that detects an external impact. The vehicle sensor 27 includes a sensor that detects a driving status DS.

The storage unit 28 includes at least one of a nonvolatile storage medium and a volatile storage medium, and stores data and a program. The storage unit 28 is used as, for example, an electrically erasable programmable read only memory (EEPROM) and a random access memory (RAM), and a magnetic storage device such as a hard disc drive (HDD), a semiconductor storage device, an optical storage device, and a magneto optical storage device can be applied as a storage medium. The storage unit 28 stores various programs and data used by each unit of the vehicle control system 11. For example, the storage unit 28 includes an event data recorder (EDR) and a data storage system for automated driving (DSSAD), and stores information of the vehicle 1 before and after an event such as an accident and information acquired by the in-vehicle sensor 26.

The travel assistance/automatic driving control unit 29 controls travel assistance and automatic driving of the vehicle 1. For example, the travel assistance/automatic driving control unit 29 includes an analysis unit 61, an action planning unit 62, and an operation control unit 63.

The analysis unit 61 performs analysis processing of a situation of the vehicle 1 and the surroundings. The analysis unit 61 includes a self-position estimation unit 71, a sensor fusion unit 72, and a recognition unit 73.

The self-position estimation unit 71 estimates the self-position of the vehicle 1 based on sensor data from the external recognition sensor 25 and highly accurate map accumulated in the map information accumulation unit 23. For example, the self-position estimation unit 71 generates a local map based on the sensor data from the external recognition sensor 25, and estimates the self-position of the vehicle 1 by matching the local map with the highly accurate map. The position of the vehicle 1 is based on, for example, the center of a rear wheel pair axle.

The local map is, for example, a three-dimensional highly accurate map created using a technology such as simultaneous localization and mapping (SLAM), an occupancy grid map, or the like. The three-dimensional highly accurate map is, for example, the above-described point cloud map or the like. The occupancy grid map is a map in which a three-dimensional or two-dimensional space around the vehicle 1 is divided into grids (grids) having a predetermined size, and an occupancy state of an object is indicated in units of grids. The occupancy state of the object is indicated by, for example, presence or absence or existence probability of the object. For example, the local map is also used for detection processing and recognition processing of a situation outside the vehicle 1 by the recognition unit 73.

It is noted that the self-position estimation unit 71 may estimate the self-position of the vehicle 1 based on the position information acquired by the position information acquisition unit 24 and the sensor data from the vehicle sensor 27.

The sensor fusion unit 72 performs sensor fusion processing of combining a plurality of different types of sensor data (for example, image data supplied from the camera 51 and sensor data supplied from the radar 52) and obtaining new information. Methods for combining different types of sensor data include integration, fusion, association, and the like.

The recognition unit 73 executes detection processing for detecting a situation outside the vehicle 1 and recognition processing for recognizing the situation outside the vehicle 1.

For example, the recognition unit 73 performs the detection processing and the recognition processing of the situation outside the vehicle 1 based on information from the external recognition sensor 25, information from the self-position estimation unit 71, information from the sensor fusion unit 72, and the like.

Specifically, for example, the recognition unit 73 performs the detection processing, the recognition processing, and the like of an object around the vehicle 1. The object detection processing is, for example, processing of detecting the presence or absence, size, shape, position, movement, and the like of an object. The object recognition processing is, for example, processing of recognizing an attribute such as a type of an object or identifying a specific object. However, the detection processing and the recognition processing are not necessarily clearly divided, and may overlap each other.

For example, the recognition unit 73 detects an object around the vehicle 1 by performing clustering to classify point clouds based on the sensor data by the radar 52, the LiDAR 53, or the like into clusters of point clouds. As a result, the presence or absence, size, shape, and position of the object around the vehicle 1 are detected.

For example, the recognition unit 73 detects the movement of the object around the vehicle 1 by performing tracking that follows the movement of the cluster of the point cloud classified by clustering. As a result, the speed and the traveling direction (movement vector) of the object around the vehicle 1 are detected.

For example, the recognition unit 73 detects or recognizes a vehicle, a person, a bicycle, an obstacle, a structure, a road, a traffic light, a traffic sign, a road sign, and the like based on the image data supplied from the camera 51. Furthermore, the recognition unit 73 may recognize the type of the object around the vehicle 1 by performing recognition processing such as semantic segmentation.

For example, the recognition unit 73 can perform recognition processing of traffic rules around the vehicle 1 based on a map accumulated in the map information accumulation unit 23, an estimation result of the self-position by the self-position estimation unit 71, and a recognition result of an object around the vehicle 1 by the recognition unit 73. Through this processing, the recognition unit 73 can recognize the position and the state of a traffic light, the contents of a traffic sign and a road mark, the contents of a traffic regulation, a travelable lane, and the like.

For example, the recognition unit 73 can perform recognition processing of an environment around the vehicle 1. As the surrounding environment to be recognized by the recognition unit 73, the presence or absence of a pedestrian and a surrounding vehicle, the weather, the temperature, the humidity, the brightness, the state of the road surface, and the like are assumed.

The action planning unit 62 creates an action plan of the vehicle 1. For example, the action planning unit 62 creates the action plan by performing processing of global path planning and path following.

It is noted that the global path planning is processing of planning a rough path from the start to the goal. This global path planning is referred to as a trajectory planning, and includes processing of performing a local path planning that enables safe and smooth traveling in the vicinity of the vehicle 1 in consideration of movement characteristics of the vehicle 1 in the planned path.

The path following is processing of planning an operation of enabling the vehicle to safely and accurately travel the path planned by the global path planning within a planned time. For example, the action planning unit 62 can calculate the target speed and the target angular velocity of the vehicle 1 based on the result of the path following processing.

The operation control unit 63 controls the operation of the vehicle 1 in order to implement the action plan created by the action planning unit 62.

For example, the operation control unit 63 controls a steering control unit 81, a brake control unit 82, and a drive control unit 83 included in the vehicle control unit 32 to be described later, and performs acceleration/deceleration control and direction control so as to allow the vehicle 1 to travel on the trajectory calculated by the trajectory planning. For example, the operation control unit 63 performs cooperative control for the purpose of implementing the functions of the ADAS such as collision avoidance or impact mitigation, follow-up traveling, vehicle speed maintaining traveling, collision warning of the host vehicle, lane deviation warning of the host vehicle, and the like. For example, the operation control unit 63 performs cooperative control for the purpose of automatic driving or the like in which a vehicle autonomously travels without depending on the operation of a driver.

The DMS 30 performs authentication processing of a driver, recognition processing of the state of a driver, and the like based on the sensor data from the in-vehicle sensor 26, input data input to the HMI 31 to be described later, and the like. As the state of the driver to be recognized, for example, a physical condition, a wakefulness level, a concentration level, a fatigue level, a line-of-sight direction, a drunkenness level, a driving operation, a posture, and the like are assumed.

It is noted that the DMS 30 may perform authentication processing of a passenger other than the driver and recognition processing of the state of the passenger. Furthermore, for example, the DMS 30 may perform recognition processing of a situation inside the vehicle based on the sensor data from the in-vehicle sensor 26. As the situation inside the vehicle to be recognized, for example, temperature, humidity, brightness, odor, and the like are assumed.

The HMI 31 inputs various data, instructions, and the like, and presents the various data to the passenger including the driver.

The data input by the HMI 31 will be schematically described. The HMI 31 includes an input device that enable a person to input data. The HMI 31 generates an input signal based on data, an instruction, or the like input by the input device, and supplies the input signal to each unit of the vehicle control system 11. The HMI 31 includes an operator such as a touch panel, a button, a switch, and a lever as the input device. The present invention is not limited thereto, and the HMI 31 may further include an input device capable of inputting information by a method other than manual operation by voice, gesture, or the like. Furthermore, the HMI 31 may use, for example, a remote control device using infrared rays or radio waves, or an external connection device such as a mobile device or a wearable device corresponding to the operation of the vehicle control system 11 as the input device.

Presentation of data by the HMI 31 will be schematically described. The HMI 31 generates visual information, auditory information, and tactile information on the passenger or the outside of the vehicle. In addition, the HMI 31 performs output control for controlling an output, an output content, an output timing, an output method, and the like of each piece of generated information. The HMI 31 generates and outputs, for example, an operation screen, a state display of the vehicle 1, a warning display, an image such as a monitor image indicating a situation around the vehicle 1, and information (the content CT) indicated by light as the visual information. Further, the HMI 31 generates and outputs, as the auditory information, information indicated by sounds such as voice guidance, a warning sound, and a warning message. Further, the HMI 31 generates and outputs, as the tactile information, information given to a tactile sense of the passenger by, for example, force, vibration, movement, or the like.

As an output device in which the HMI 31 outputs the visual information, for example, a display device that presents visual information by displaying an image by itself or a projector device that presents visual information by projecting an image can be applied. It is noted that the display device may be a device that displays visual information in the field of view of the passenger, such as a head-up display, a transmissive display, or a wearable device having an augmented reality (AR) function, in addition to a display device having a normal display. Further, in the HMI 31, a display device included in a navigation device, an instrument panel, a camera monitoring system (CMS), an electronic mirror, a lamp, or the like provided in the vehicle 1 can also be used as an output device that outputs the visual information.

As an output device in which the HMI 31 outputs the auditory information, for example, an audio speaker, a headphone, or an earphone can be applied.

As an output device in which the HMI 31 outputs the tactile information, for example, a haptic element using a haptic technology can be applied. The haptic element is provided, for example, at a portion with which the passenger of the vehicle 1 comes into contact, such as a steering wheel or a seat.

The vehicle control unit 32 controls each unit of the vehicle 1. The vehicle control unit 32 includes the steering control unit 81, the brake control unit 82, the drive control unit 83, a body system control unit 84, a light control unit 85, and a horn control unit 86.

The steering control unit 81 detects and controls the state of the steering system of the vehicle 1. The steering system includes, for example, a steering mechanism including a steering wheel and the like, electric power steering, and the like. The steering control unit 81 includes, for example, a steering ECU that controls the steering system, an actuator that drives the steering system, and the like.

The brake control unit 82 detects and controls the state of a brake system of the vehicle 1. The brake system includes, for example, a brake mechanism including a brake pedal, an antilock brake system (ABS), a regenerative brake mechanism, and the like. The brake control unit 82 includes, for example, a brake ECU that controls the brake system, an actuator that drives the brake system, and the like.

The drive control unit 83 detects and controls the state of a drive system of the vehicle 1. The drive system includes, for example, a driving force generation device for generating driving force such as an accelerator pedal, an internal combustion engine, or a driving motor, a driving force transmission mechanism for transmitting the driving force to wheels, and the like. The drive control unit 83 includes, for example, a drive ECU that controls the drive system, an actuator that drives the drive system, and the like.

The body system control unit 84 detects and controls the state of a body system of the vehicle 1. The body system includes, for example, a keyless entry system, a smart key system, a power window device, a power seat, an air conditioner, an airbag, a seat belt, a shift lever, and the like. The body system control unit 84 includes, for example, a body system ECU that controls the body system, an actuator that drives the body system, and the like.

The light control unit 85 detects and controls the states of various lights of the vehicle 1. As the light to be controlled, for example, a headlight, a backlight, a fog light, a turn signal, a brake light, a projection, a display of a bumper, and the like are assumed. The light control unit 85 includes a light ECU that controls light, an actuator that drives the light, and the like.

The horn control unit 86 detects and controls the state of a car horn of the vehicle 1. The horn control unit 86 includes, for example, a horn ECU that controls a car horn, an actuator that drives the car horn, and the like.

### [3. Sensing region of external recognition sensor]

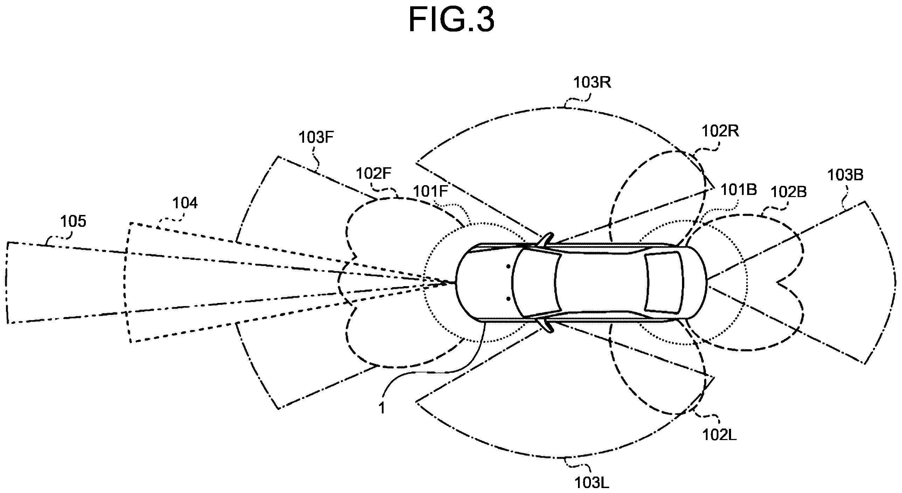

FIG. 3 is a diagram illustrating an example of a sensing region by the camera 51, the radar 52, the LiDAR 53, the ultrasonic sensor 54, and the like of the external recognition sensor 25. It is noted that FIG. 3 schematically illustrates the vehicle 1 as viewed from above. When FIG. 3 is viewed in a posture in which a reference sign is displayed in the correct direction, the left end side is defined as the front end (front) side of the vehicle 1, and the right end side is defined as the rear end (rear) side of the vehicle 1.

A sensing region 101F and a sensing region 101B illustrate examples of the sensing region of the ultrasonic sensor 54. The sensing region 101F covers the periphery of the front end of the vehicle 1 by the plurality of ultrasonic sensors 54. The sensing region 101B covers the periphery of the rear end of the vehicle 1 by the plurality of ultrasonic sensors 54.

Sensing results in the sensing region 101F and the sensing region 101B are used, for example, for parking assistance of the vehicle 1.

Sensing regions 102F to 102B illustrate examples of the sensing regions of the radar 52 for a short distance or a middle distance. The sensing region 102F covers a position farther than that of the sensing region 101F in front of the vehicle 1. The sensing region 102B covers a position farther than that of the sensing region 101B behind the vehicle 1. A sensing region 102L covers the rear periphery of the left side surface of the vehicle 1. A sensing region 102R covers the rear periphery of the right side surface of the vehicle 1.

A sensing result in the sensing region 102F is used, for example, to detect a vehicle, a pedestrian, or the like existing in front of the vehicle 1. A sensing result in the sensing region 102B is used, for example, to perform a collision prevention function or the like behind the vehicle 1. Sensing results in the sensing region 102L and the sensing region 102R are used, for example, to detect an object existing in a blind spot on the side of the vehicle 1.

Sensing regions 103F to 103B illustrate examples of sensing regions by the camera 51. The sensing region 103F covers a position farther than that of the sensing region 102F in front of the vehicle 1. The sensing region 103B covers a position farther than that of the sensing region 102B behind the vehicle 1. A sensing region 103L covers the periphery of the left side surface of the vehicle 1. A sensing region 103R covers the periphery of the right side surface of the vehicle 1.

A sensing result in the sensing region 103F can be used for, for example, recognition of a traffic light or a traffic sign, a lane departure prevention assistance system, and an automatic headlight control system. A sensing result in the sensing region 103B can be used for, for example, parking assistance and a surround view system. Sensing results in the sensing region 103L and the sensing region 103R can be used for, for example, a surround view system.

A sensing region 104 shows an example of a sensing region of the LiDAR 53. The sensing region 104 covers a position farther than that of the sensing region 103F in front of the vehicle 1. Meanwhile, the sensing region 104 has a narrower range in the left-and-right direction than that of the sensing region 103F.

A sensing result in the sensing region 104 is used, for example, to detect an object such as a surrounding vehicle.

A sensing region 105 illustrates an example of a sensing region of the radar 52 for long distance. The sensing region 105 covers a position farther than that of the sensing region 104 in front of the vehicle 1. Meanwhile, the sensing region 105 has a narrower range in the left-and-right direction than that of the sensing region 104.

A sensing result in the sensing region 105 is used for, for example, adaptive cruise control (ACC), emergency braking, collision avoidance, and the like.

It is noted that the sensing regions of the respective sensors of the camera 51, the radar 52, the LiDAR 53, and the ultrasonic sensor 54 included in the external recognition sensor 25 may have various configurations other than those in FIG. 3. Specifically, the ultrasonic sensor 54 may also sense the side of the vehicle 1, or the LiDAR 53 may sense the rear of the vehicle 1. In addition, the installation position of each sensor is not limited to each example described above. The number of sensors may be one or more.

### [4. Configuration example of video display unit]

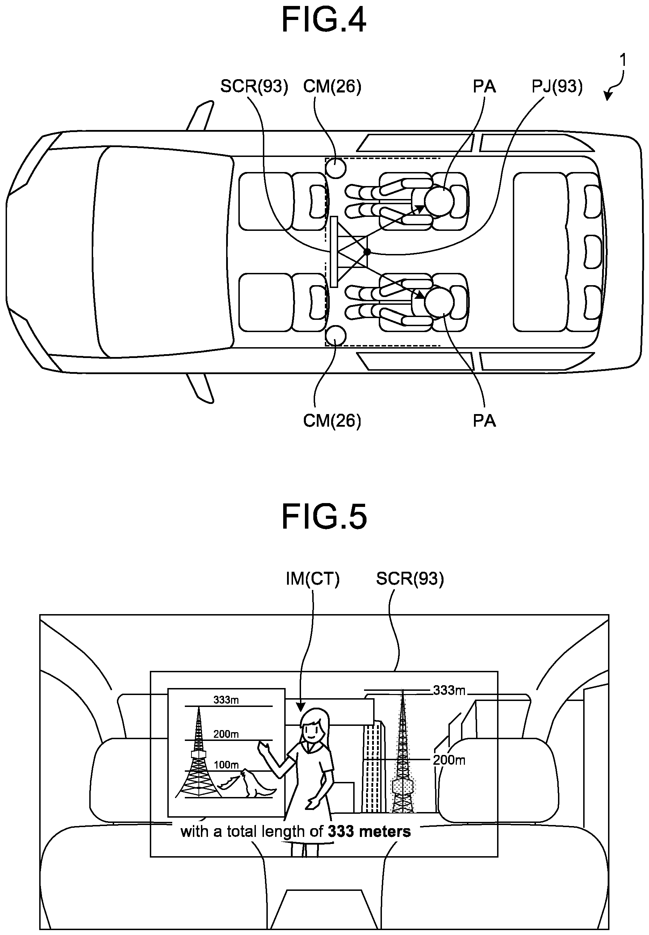

FIG. 4 is a diagram illustrating a configuration example of the in-vehicle sensor 26 and the video display unit 93. FIG. 5 is a diagram illustrating a display example of a video IM provided as the content CT.

In the examples of FIGS. 4 and 5, a video display unit 93 is disposed so as to partition front row seats (driver's seat and passenger's seat) and rear row seats. A camera CM for monitoring the passenger PA on the rear row seat is installed in the vehicle. The camera CM functions as the in-vehicle sensor 26. In the example of FIG. 4, the two cameras CM monitor the entire vehicle interior space (rear space) behind the front row seat.

The DMS 30 acquires viewing state information VS of the passenger PA in the rear space based on a video captured by the camera CM. The viewing state information VS includes, for example, information regarding the number of passengers PA, whether the passenger PA is awake, the field of view of the passenger PA, and whether the passenger PA gazes the content CT. In a case where there are a plurality of passengers PA, it is determined, for each passenger PA, the field of view of the passenger PA, whether the passenger PA is awake and whether the passenger PA gazes the content CT. The HMI 31 controls display of the content CT based on the viewing state information VS.

The video display unit 93 is an optical see-through type display or a video see-through type display capable of transmitting and displaying a background. In the present disclosure, as an example, the optical see-through type display is used as the video display unit 93. As the video display unit 93, a known transparent display or technology such as a head-up display (HUD), a transparent organic light emitting diode (OLED), and a transparent light emitting diode (LED) is used. In the present disclosure, as the video display unit 93, for example, a configuration for projecting a video on a transparent screen SCR is adopted.

The video display unit 93 includes, for example, the transparent screen SCR and a projector PJ. The transparent screen SCR includes an optical lens film that reflects light projected from the projector PJ. A light control film capable of electrically controlling the transmittance of external light is laminated on the optical lens film. The HMI 31 adjusts display brightness or transparency or haze of the video display unit 93 (the transparent screen SCR) based on brightness information outside the vehicle extracted from environment information CE. When the content CT is not displayed on the video display unit 93, the passenger PA can see the scene outside the vehicle through the transparent screen SCR from a gap between the driver seat and the front passenger seat.

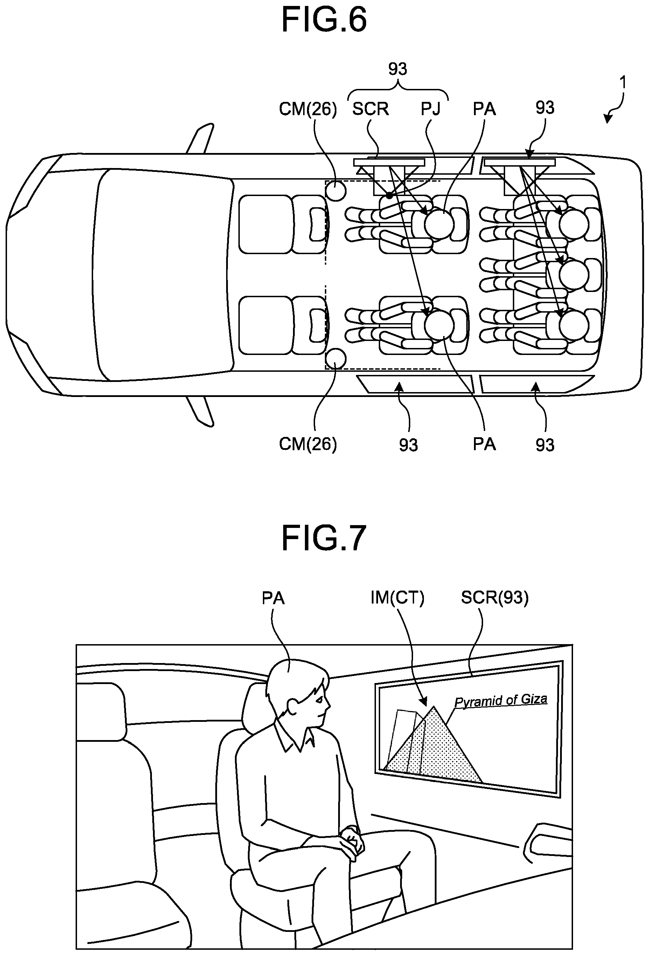

FIG. 6 is a diagram illustrating another configuration example of the video display unit 93. FIG. 7 is a diagram illustrating a display example of the video IM provided as the content CT.

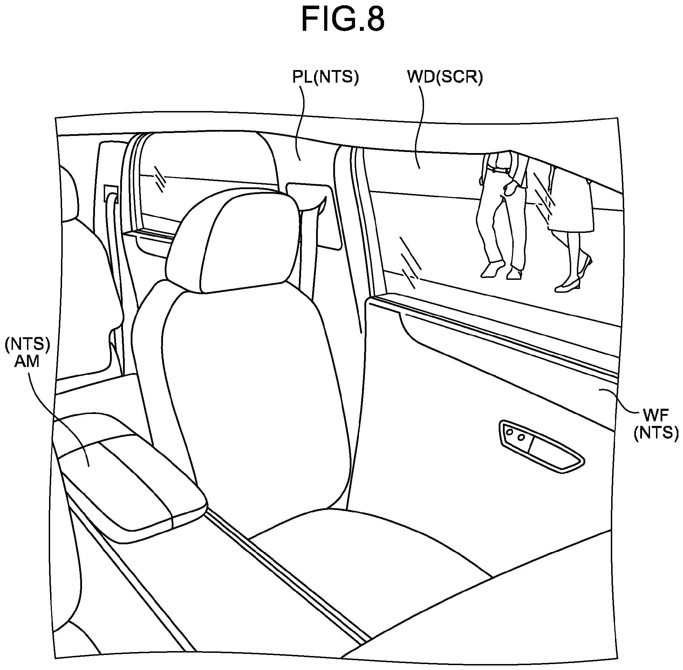

In the examples of FIGS. 6 and 7, the video display unit 93 is installed on the side of the passenger PA in the rear row seat. Side glass (window WD: refer to FIG. 8) of the vehicle 1 is replaced by the transparent screen SCR. Instead of using the side glass as the transparent screen SCR, a film-like transparent screen may be attached to the surface of the side glass or sandwiched inside the side glass. When the video IM is not displayed, the passenger PA can see the scene outside the vehicle through the transparent screen SCR.

In the examples of FIGS. 6 and 7, the side glass of the rear seat has a function of the transparent screen SCR, but the glass having the function of the transparent screen SCR is not limited to the side glass of the rear seat. The windshield, the side glass of the front seat, or the rear glass may have the function of the transparent screen SCR.

FIG. 8 is a diagram illustrating another configuration example of the video display unit 93.

The video display unit 93 may adopt a configuration in which the content CT is projected onto a non-transparent screen NTS such as a window frame WF. In the example of FIG. 8, the window frame WF, a pillars PL, and an arm rest AM are used as the non-transparent screen NTS. When a desk or the like is installed in the vehicle, the desk may be used as the non-transparent screen NTS.

### [5. Functional configuration related to video display]

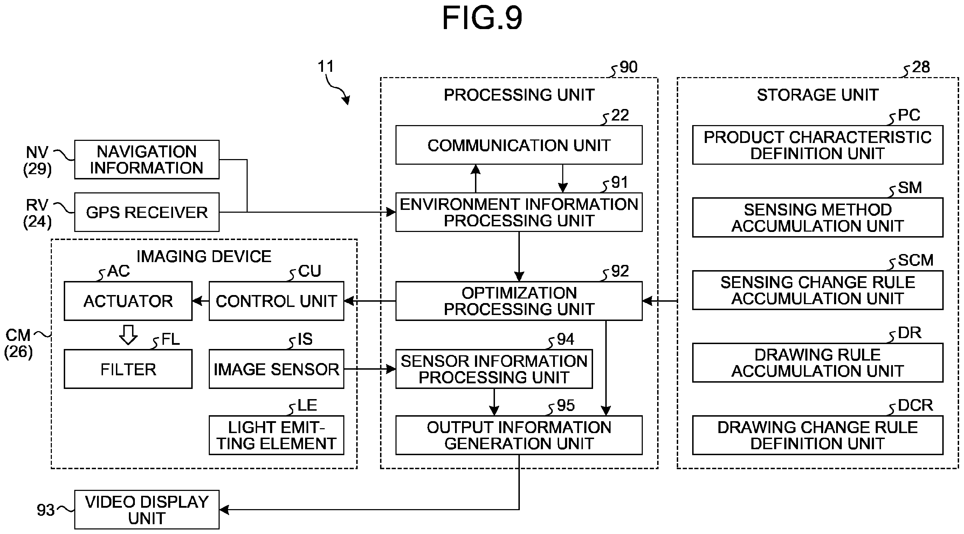

FIG. 9 is a diagram illustrating an example of a functional configuration related to the video display of the vehicle 1.

The vehicle control system 11 is an information processing system that integrally controls the vehicle 1. The vehicle control system 11 includes a processing unit 90, the camera CM, a GPS receiver RV, the video display unit 93, and the storage unit 28.

The processing unit 90 is an information processing apparatus that processes various types of information. The processing unit 90 receives user input information and provides a function of displaying a graphic to the passenger PA. The processing unit 90 has a control layer of a general OS that performs gesture detection such as multi-content drawing control and a touch operation. The processing unit 90 determines a drawing method of the content CT based on navigation information NV and a reception signal of the GPS receiver RV. The processing unit 90 determines the operation of a device or an application by the passenger PA based on sensing information of the camera CM.

The navigation information NV refers to information from a general car navigation system. The navigation information NV includes information on a destination and a movement path. The GPS receiver RV refers to a general sanitary positioning system. The GPS receiver RV receives a signal indicating the current position of the vehicle 1. The GPS receiver RV is included in the position information acquisition unit 24.

The camera CM analyzes an image of an image sensor IS acquired via a filter FL and senses a human body. The camera CM is included in the in-vehicle sensor 26. There are two types of filters FL including an infrared transmission filter and a visible light transmission filter. The processing unit 90 determines which filter FL is used to perform sensing based on the environment outside the vehicle. A control unit CU drives an actuator AC based on a determined sensing method, and changes the filter FL. It is noted that, when an infrared image is captured, infrared rays are emitted from a light emitting element LE.

The processing unit 90 includes an environment information processing unit 91, an optimization processing unit 92, a sensor information processing unit 94, an output information generation unit 95, and the communication unit 22.

The environment information processing unit 91 acquires the navigation information NV from the travel assistance/automatic driving control unit 29. The environment information processing unit 91 specifies the current position of the vehicle 1 based on the reception signal of the GPS receiver RV. The environment information processing unit 91 specifies a movement path from the current location based on the navigation information NV, and acquires a map around the movement path from the map information accumulation unit 23. The environment information processing unit 91 accesses information on the Internet via the communication unit 22 as necessary, and acquires weather information for each traveling position. As a result, path information (movement path, map around movement path, weather information for each traveling position) for the destination is acquired. The environment information processing unit 91 predicts a transition of the environment outside the vehicle during viewing of the content CT based on the path information.

The optimization processing unit 92 determines the drawing method of the content CT based on the predicted transition of the environment outside the vehicle. For example, the environment information processing unit 91 generates environment information indicating a prediction result of the environment outside the vehicle for each time, and transmits the environment information to the optimization processing unit 92. The environment information includes, for example, a traveling position of the vehicle 1, weather of the traveling position, a traveling direction, a peripheral map of the outside of the vehicle, and information regarding brightness (illuminance) of the environment outside the vehicle. The optimization processing unit 92 determines a drawing condition (an appropriate drawing condition) corresponding to the predicted environment outside the vehicle for each time. The optimization processing unit 92 determines a drawing method (an optimum drawing condition) based on a statistical result of the drawing condition for each time. Thus, the drawing method is optimized. A drawing method determination algorithm is defined in a drawing rule accumulation unit DR.

The optimization processing unit 92 determines a sensing method of the camera CM based on the predicted transition of the environment outside the vehicle. For example, the optimization processing unit 92 determines, for each time, a sensing method (an appropriate sensing method) according to the predicted environment outside the vehicle. The optimization processing unit 92 determines, for each time, a sensing method (an optimum sensing condition) based on a statistical result of the appropriate sensing method. As a result, the sensing method is optimized.

For example, in a case where a bright environment (an environment with many infrared rays) is predicted, sensing of the passenger PA is performed based on a visible light image. In a case where a dark environment is predicted, sensing of the passenger PA is performed based on an infrared image. A sensing method determination algorithm is defined in a sensing method accumulation unit SM.

The sensor information processing unit 94 determines an operation of a device or an application that is performed by the passenger PA based on the sensing information of the camera CM. The output information generation unit 95 generates drawing information (the content CT) according to the operation of the passenger PA and outputs the drawing information to the video display unit 93. The video display unit 93 draws the drawing information by the drawing method determined by the optimization processing unit 92.

The optimization processing unit 92 can change, depending on the environment outside the vehicle, the drawing method and the sensing method optimized according to the prediction result. A sensing method change algorithm is defined in a sensing change rule definition unit SCM. A drawing method change algorithm is defined in a drawing change rule definition unit DCR.

For example, in a case where a bright environment is predicted, but the environment is actually dark, the sensing method of the passenger PA is changed from a method based on the visible light image to a method based on the infrared image. In addition, in a case where drawing on the window WD is not appropriate in practice due to an influence of a street lamp or the like although it is planned to draw on the window WD because a dark landscape is expected, a drawing position is changed to a position other than the window WD (for example, the arm rest AM, a desk installed in the vehicle, or the like).

The storage unit 28 stores a product characteristic definition unit PC, the sensing method accumulation unit SM, the sensing change rule definition unit SCM, the drawing rule accumulation unit DR, and the drawing change rule definition unit DCR. The product characteristic definition unit PC defines a characteristic (a product characteristic) of a product on which the vehicle control system 11 is mounted. Product characteristic includes information on a mobility and a display type. The "mobility" indicates whether the product is a moving object such as a vehicle or a fixed object such as a digital signage. The "display type" indicates whether the display is transparent.

### [6. Control flow]

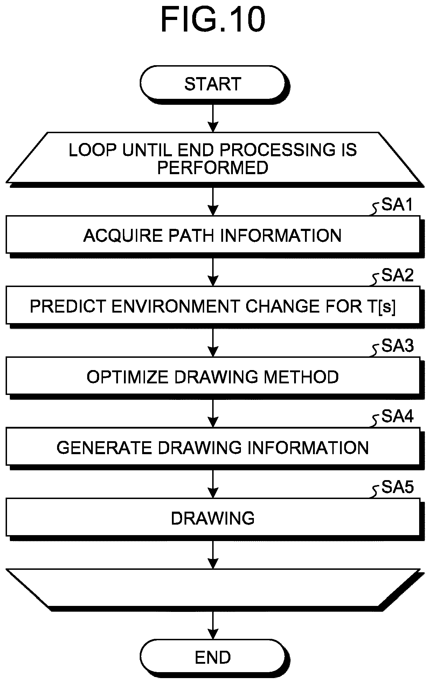

FIG. 10 is a diagram illustrating an example of a control flow related to determination processing of the drawing method.

When the display control of the content CT is started, the environment information processing unit 91 acquires path information from a current position toward a destination (Step SA1). Based on the path information, the environment information processing unit 91 predicts a change in an environment outside a vehicle during viewing of the content CT (for example, a period from the current time to T seconds later) (Step SA2).

The optimization processing unit 92 optimizes a drawing method of the content CT based on a transition of the environment outside the vehicle during the viewing of the content CT (Step SA3). The output information generation unit 95 generates drawing information (the content CT) according to an operation of the passenger PA (Step SA4). The video display unit 93 draws the drawing information by the drawing method determined by the optimization processing unit 92 (Step SA5). The processing unit 90 repeats the above-described processing until end processing is performed by the operation of the passenger PA.

### [7. Display control example]

Hereinafter, a specific example of the display control of the content CT will be described. The content CT to be subjected to the display control is a content capable of changing at least one of a drawing position and a drawing color. In the following example, an icon group that performs reproduction, stop, volume adjustment, setting change, and the like of a moving image content such as a movie is exemplified as a target of the display control. Since a color of a main video of the moving image content cannot be changed, only the drawing position is a target of the display control.

### [7-1. Display of content on transparent screen]

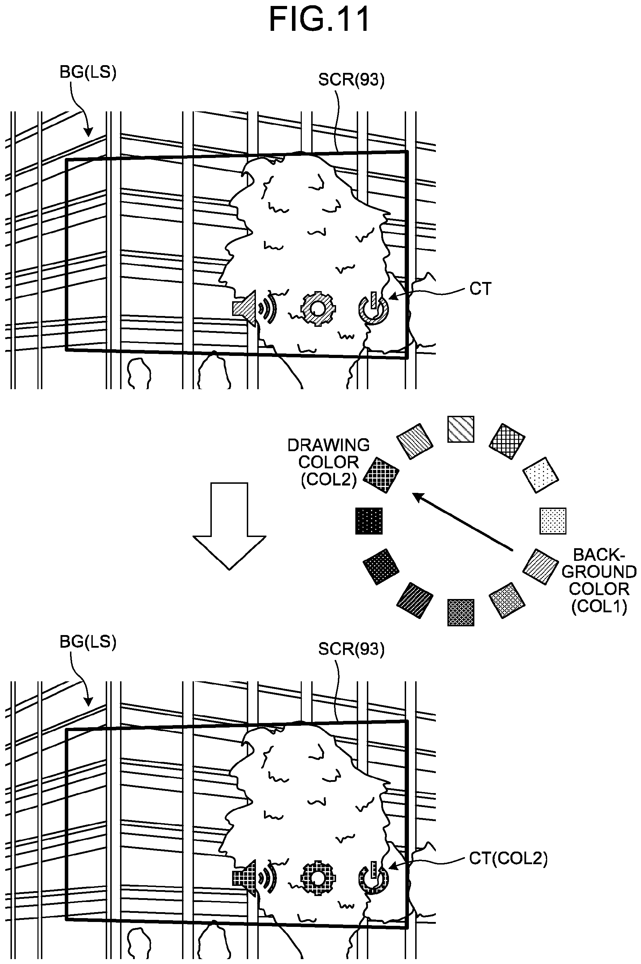

FIG. 11 is a diagram illustrating a display example of the content CT on the transparent screen SCR.

Upon determining that the sun does not enter the field of view of the passenger PA through the transparent screen SCR based on environment information, the optimization processing unit 92 determines, as the drawing position of the content CT, the transparent screen SCR.

The optimization processing unit 92 detects a landscape LS outside the vehicle, in which the landscape LS is seen through the transparent screen SCR serving as a drawing target of the content CT, as a background BG of the content CT. The optimization processing unit 92 determines a drawing color COL2 of the content CT based on a color COL1 of the background BG. For example, the optimization processing unit 92 determines a complementary color of the color COL1 of the background BG as the drawing color COL2. In the example of FIG. 11, the content CT is superimposed on trees with green leaves. Therefore, purple, which is a complementary color of green, is determined as the drawing color COL2 of the content CT.

### [7-2. Superimposition avoidance with sun]

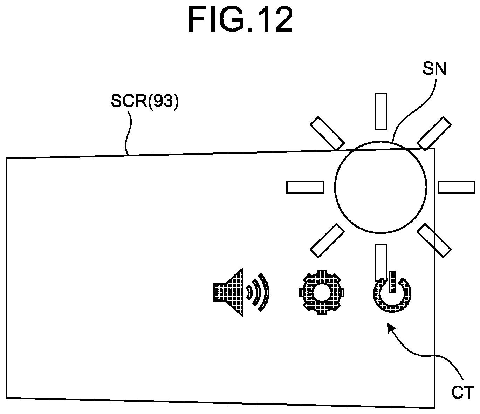

FIG. 12 is a diagram illustrating a display example in a case where the sun SN is directly viewed through the transparent screen SCR.

Upon determining that the sun SN enters the field of view of the passenger PA through the transparent screen SCR based on environment information, the optimization processing unit 92 determines, as a drawing position of a part or all of the content CT, a position on the transparent screen SCR that does not overlap the sun SN or the non-transparent screen NTS. In the example of FIG. 12, the content CT is drawn at the position on the transparent screen SCR that does not overlap the sun SN, but the content CT may be drawn on the non-transparent screen NTS such as the window frame WF or the pillar PL.

### [7-3. Display of content on non-transparent screen]

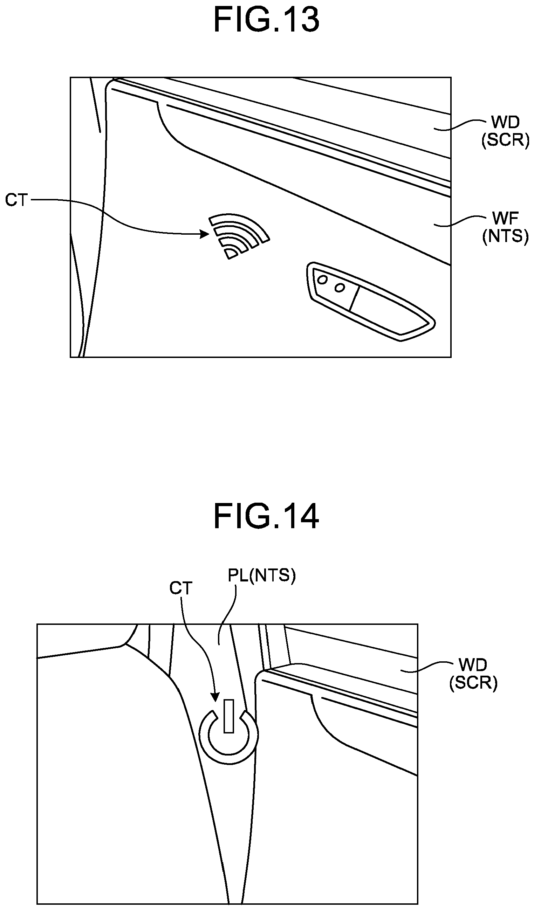

FIGS. 13 and 14 are diagrams illustrating a display example of the content CT on the non-transparent screen NTS.

In the example of FIG. 13, the rising sun or the setting sun directly reaches the non-transparent screen NTS. Upon determining that the rising sun or the setting sun directly reaches a content drawing position of the non-transparent screen NTS based on environment information, the optimization processing unit 92 determines an orange color as the color COL1 of the background BG of the content CT.

The example of FIG. 14 is an example in which the content CT is drawn at a position on the non-transparent screen NTS into which sunlight is not introduced. The optimization processing unit 92 detects the non-transparent screen NTS, which is a drawing target of the content CT, as the background BG of the content CT, and determines a drawing color based on the color of the background BG. For example, upon determining that sunlight does not directly reach the content drawing position of the non-transparent screen NTS based on the environment information, the optimization processing unit 92 determines, as the color COL1 of the background BG of the content CT, a color having luminance lower than luminance of a color of a material of the non-transparent screen NTS at the content drawing position.

In the example of FIG. 14, the content CT is drawn in the pillar PL. When sunlight is not introduced, the color of the non-transparent screen NTS serving as a projection destination of the content CT is recognized as a color darker than the original color of the material of the non-transparent screen NTS. Therefore, the optimization processing unit 92 determines, as the background color COL1, the color having luminance lower than luminance of the color of the material of the projection destination. When the color of the pillar PL is a gray color, the background color COL1 is a dark gray color. The optimization processing unit 92 determines a complementary color of the dark gray color (for example, a whitish orange color) as the drawing color COL2 of the content CT.

### [7-4. Optimization of drawing method based on prediction of transition of environment outside vehicle]

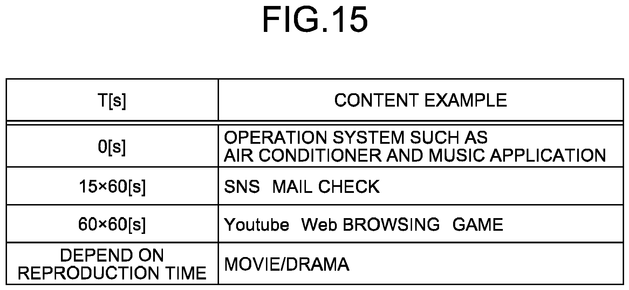

A specification description will be given as to optimization of a drawing method based on prediction of a transition of an environment outside a vehicle with reference to FIGS. 15 to 20.

### [7-4-1. Prediction period]

FIG. 15 is an explanatory diagram of a prediction period during which the transition of the environment outside the vehicle is predicted.

A prediction period (T seconds) is defined for each content CT. For example, the prediction period is set based on a standard time at which the content CT is gazed. In the example of FIG. 15, the prediction period of an operation-related content CT that does not require the gaze, such as an air conditioner and a music application, is set to 0. Regarding the content CT having a relatively short browsing time, such as an SNS and an e-mail, the prediction period is set to 15 × 60 seconds. Regarding the content CT having a relatively long browsing time such as Youtube, a browser, and a game, the prediction period is set to 60 × 60 seconds. Regarding the content CT, the reproduction time of which is known in advance, such as a movie and a drama, the prediction period is set to the reproduction time of the content CT.

### [7-4-2. Determination of drawing method]

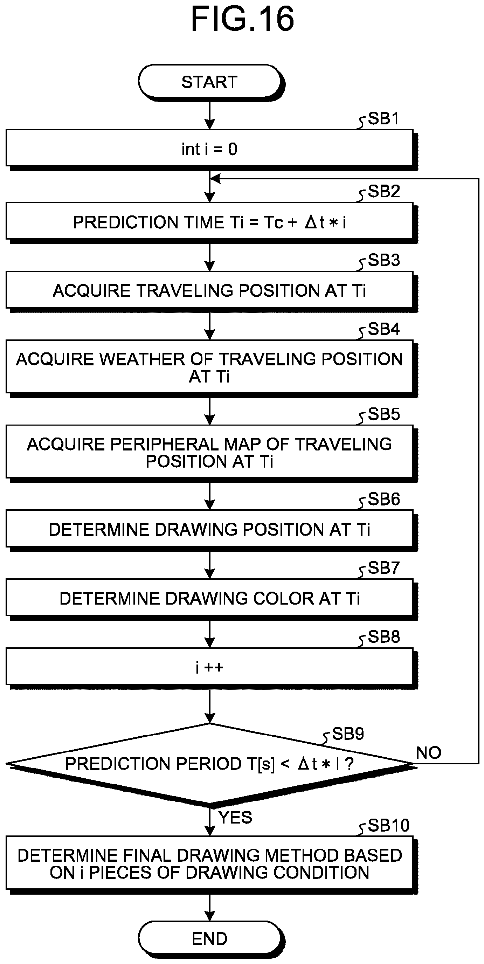

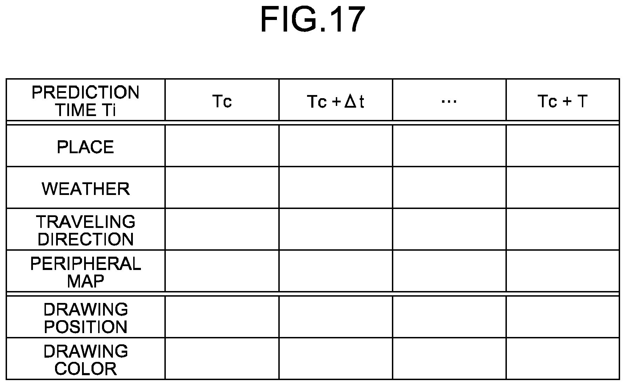

FIG. 16 is a flowchart illustrating determination processing of a drawing method. FIG. 17 is a diagram illustrating a table used for the determination processing of the drawing method.

The processing unit 90 sets a variable i to 0 (Step SB1). The environment information processing unit 91 sets a prediction time Ti to Ti = Tc + Δt × i (Step SB2). The environment information processing unit 91 acquires a traveling position at the prediction time Ti based on the navigation information NV (Step SB3). The environment information processing unit 91 acquires the weather at the traveling position at the prediction time Ti based on weather information or the like provided by the Meteorological Agency (Step SB4). The environment information processing unit 91 acquires a peripheral map of the traveling position at the prediction time Ti from the map information accumulation unit 23 (Step SB5).

The optimization processing unit 92 detects a landscape LS outside the vehicle, the landscape LS serving as the background BG of the content CT, based on the traveling position, the traveling direction, and the peripheral map of the outside of the vehicle 1 at the prediction time Ti. The optimization processing unit 92 determines the drawing position and the drawing color COL2 of the content CT at the prediction time Ti based on the background BG, and fills the table in FIG. 17 (Steps SB6 and SB7). The processing unit 90 increases a value of the variable i by 1 (Step SB8) and determines whether the prediction period (T seconds) is smaller than Δt × i (Step SB9) .

When the prediction period (T seconds) is smaller than Δt × i (Step SB9: Yes), the optimization processing unit 92 performs statistical processing such as calculation of a mode value and calculation of an average value on the plurality of drawing conditions calculated for each time. The optimization processing unit 92 determines the drawing method obtained by the statistical processing of the plurality of drawing conditions as an optimum drawing method (Step SB10). When the prediction period (T seconds) is Δt × i or longer (Step SB9: No), the processing returns to Step SB2, and the processing from Step SB2 to Step SB9 is repeatedly performed.

### [7-4-3. Specific example of drawing position and drawing color]

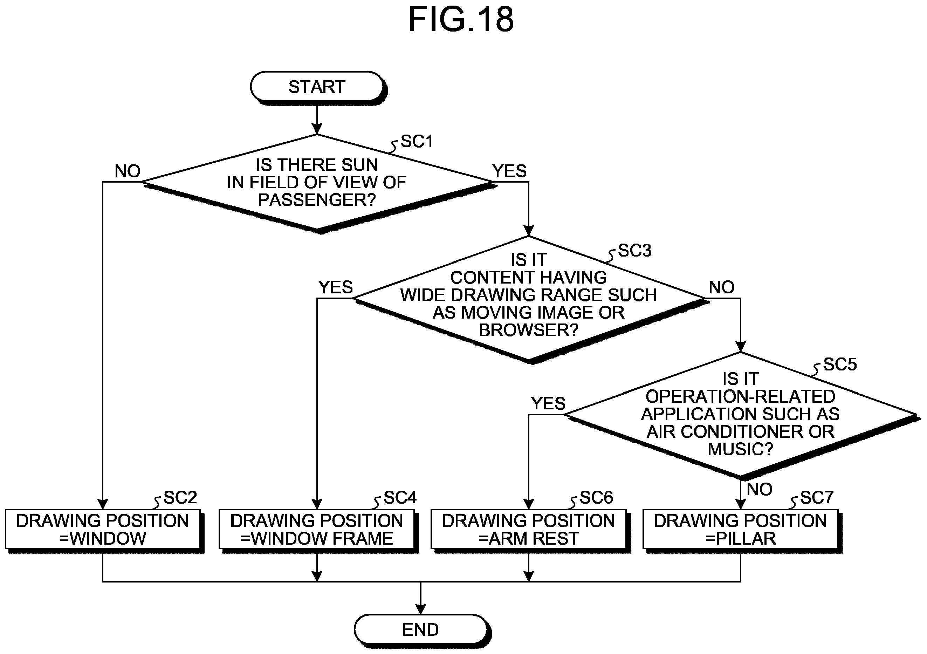

FIG. 18 is a flow illustrating a specific example of the determination method of the drawing position for each time.

The optimization processing unit 92 determines whether there is the sun in the field of view of the passenger PA based on environment information (Step SC1). If there is no sun in the field of view of the passenger PA (Step SC1: No), the optimization processing unit 92 sets a drawing position in the window WD (Step SC2).

When the sun is in the field of view of the passenger PA (Step SC1: Yes), the optimization processing unit 92 determines whether the displayed content CT is a content having a wide drawing range, such as a moving image or a browser (Step SC3). When the content CT having a wide drawing range is displayed (Step SC3: Yes), the optimization processing unit 92 sets the drawing position in the window frame WF (Step SC4).

When the content CT having a narrow drawing range is displayed (Step SC3: No), the optimization processing unit 92 determines whether the content CT is an operation-related application such as an air conditioner or music (Step SC5). When the operation-related application is displayed as the content CT (Step SC5: Yes), the optimization processing unit 92 sets the drawing position to the arm rest AM (Step SC6). When the content CT is not the operation-related application (Step SC5: No), the optimization processing unit 92 sets the pillar PL as the drawing position (Step SC7).

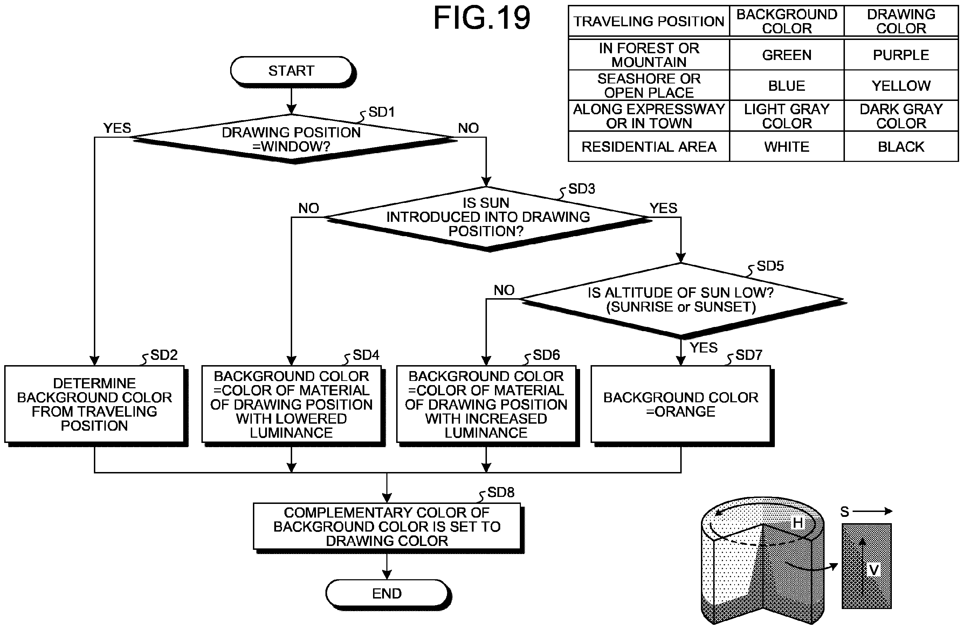

FIG. 19 is a flow illustrating a specific example of the determination method of the drawing color COL2 for each time.

The optimization processing unit 92 determines whether a drawing position is the window WD (the transparent screen SCR) (Step SD1). When the drawing position is the window WD (Step SD1: Yes), the optimization processing unit 92 determines the background color COL1 from the traveling position of the vehicle 1 (Step SD2).

When the drawing position is the non-transparent screen NTS (Step SD1: No), the optimization processing unit 92 determines whether sunlight is introduced into the drawing position of the content CT (Step SD3). When sunlight is not introduced to a content drawing position (Step SD3: No), the optimization processing unit 92 determines, as the background color COL1, a color having luminance lower than luminance of a color of a material of the non-transparent screen NTS at the content drawing position (Step SD4).

When sunlight is introduced into the content drawing position (Step SD3: Yes), the optimization processing unit 92 determines whether the altitude of the sun SN is low (sunrise or sunset) (Step SD5). When the altitude of the sun SN is high (Step SD5: No), the optimization processing unit 92 determines, as the background color COL1, a color brighter than the color of the material of the non-transparent screen NTS (Step SD6). That is, upon determining that daylight directly reaches the content drawing position of the non-transparent screen NTS based on the environment information, the optimization processing unit 92 determines, as the color COL1 of the background BG, a color having luminance higher than luminance of the color of the material of the non-transparent screen NTS at the content drawing position. When the altitude of the sun SN is low (Step SD5: Yes), the optimization processing unit 92 determines, as the background color COL1, an orange color (Step SD7).

When the background color COL1 is determined, the optimization processing unit 92 determines a complementary color of the background color COL1 as the drawing color COL2 (Step SD8). For example, when the traveling position is in a forest or a mountain, the background color COL1 is determined as a green color, and the drawing color COL2 is determined as a purple color. When the traveling position is a seashore or an open place (a place at which the sky is visible), the background color COL1 is determined as a blue color, and the drawing color COL2 is determined as a yellow color. When the traveling position is along an expressway or in town, the background color COL1 is determined as a light gray color, and the drawing color COL2 is determined as a dark gray color. When the traveling position is in a residential area, the background color COL1 is determined as a white color, and the drawing color COL2 is determined as a black color.

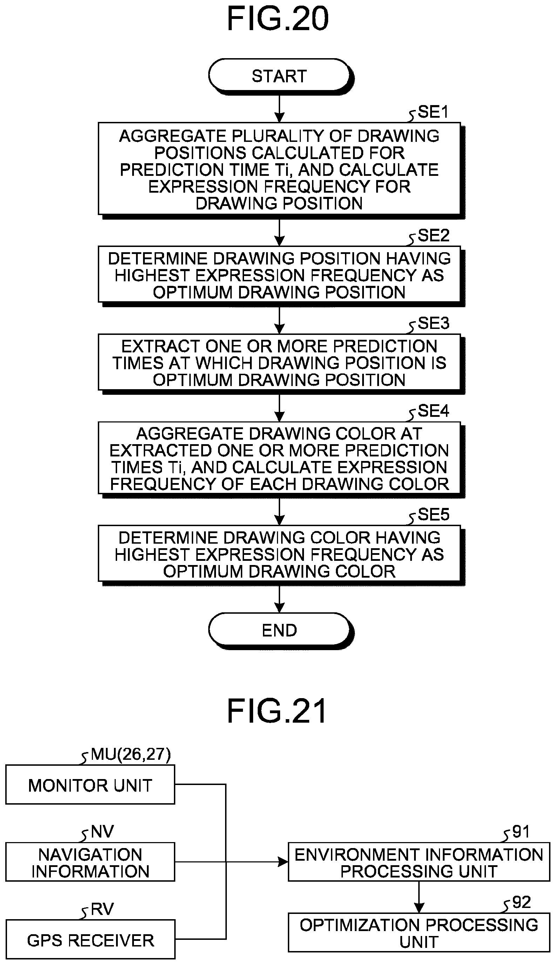

FIG. 20 is a flow illustrating a specific example of optimization by statistical processing.

The optimization processing unit 92 aggregates a plurality of drawing positions calculated for each prediction time Ti and calculates an expression frequency for each drawing position (Step SE1). The optimization processing unit 92 determines a drawing position having the highest expression frequency as an optimum drawing position (Step SE2).

The optimization processing unit 92 extracts one or more prediction times Ti at which the drawing position is the optimum drawing position (Step SE3). The optimization processing unit 92 aggregates the drawing colors at the extracted one or more prediction times Ti and calculates the expression frequency of each drawing color (Step SE4). The optimization processing unit 92 determines the drawing color having the highest expression frequency as the optimum drawing color (Step SE5). The optimization processing unit 92 determines, as the drawing method of the content CT, a drawing method having the optimum drawing position and the optimum drawing color as an optimum drawing condition.

### [7-5. Change of drawing method]

FIG. 21 is a diagram illustrating change processing of the drawing method.

The optimization processing unit 92 can temporarily change a drawing condition of the content CT according to a situation inside and outside the vehicle. The situation inside and outside the vehicle is monitored by the monitor unit MU. The monitor unit MU includes, for example, the external recognition sensor 25 and the in-vehicle sensor 26. The environment information processing unit 91 detects a surrounding situation of the vehicle 1 and a viewing environment in the vehicle based on a monitoring result of the monitor unit MU. The optimization processing unit 92 temporarily changes the drawing method performed under the optimum drawing condition based on the surrounding situation of the vehicle 1 and the viewing environment in the vehicle. Specific examples will be described below.

### [7-5-1. Countermeasure against visually induced motion sickness]

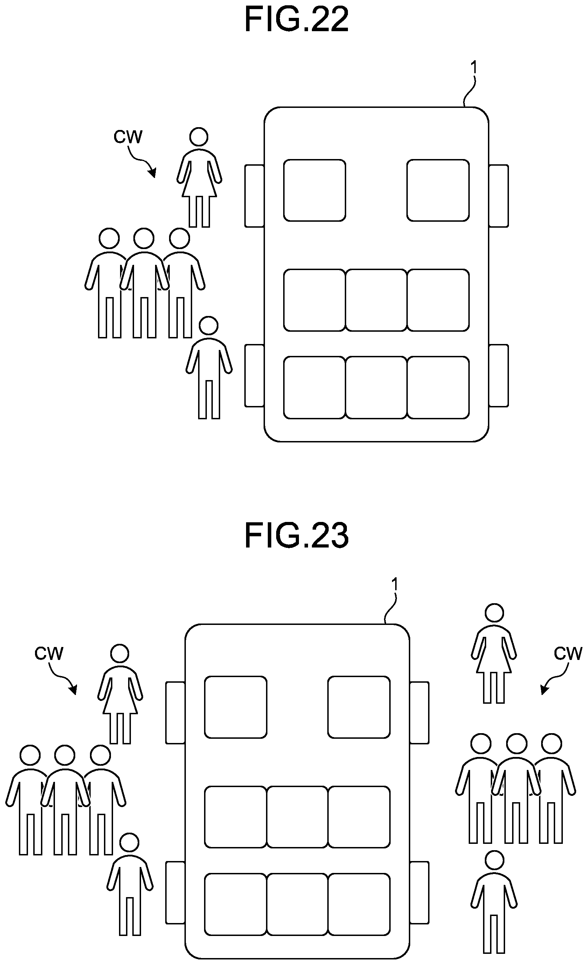

FIGS. 22 and 23 are diagrams illustrating examples of changing the drawing method according to the surrounding situation of the vehicle 1.

When the content CT is superimposed on the transparent screen SCR, visibility of the content CT is changed depending on a situation around the vehicle 1, in which the situation serves as the background BG. For example, when a crowd CW exists in the background BG of the content CT, the passenger PA simultaneously observes the movement of the crowd passing through the transparent screen SCR while gazing at the content CT. Therefore, autonomic nerves may be disordered, and symptoms similar to carsickness (visually induced motion sickness) may appear.

Therefore, when the crowd CW is detected at a position serving as the background BG while drawing is being performed at the optimum drawing position, the drawing position is changed to a position avoiding the crowd CW. For example, upon determining that the crowd CW outside the vehicle enters the field of view of the passenger PA via the specific transparent screen SCR, the optimization processing unit 92 determines, as a drawing position of a part or all of the content CT, the transparent screen SCR other than the specific transparent screen SCR or the non-transparent screen NTS.

In the example of FIG. 22, the crowd CW exists on the left side of the vehicle 1. Therefore, the drawing position is changed to the window WD on the right side of the vehicle 1 at a position where the crowd CW is not seen through the window. In the example of FIG. 23, the crowd CW exists on both sides of the vehicle 1. Therefore, the drawing position is changed to the transparent screen SCR at the center of the vehicle 1 illustrated in FIG. 4 or the non-transparent screen NTS such as the arm rest AM.

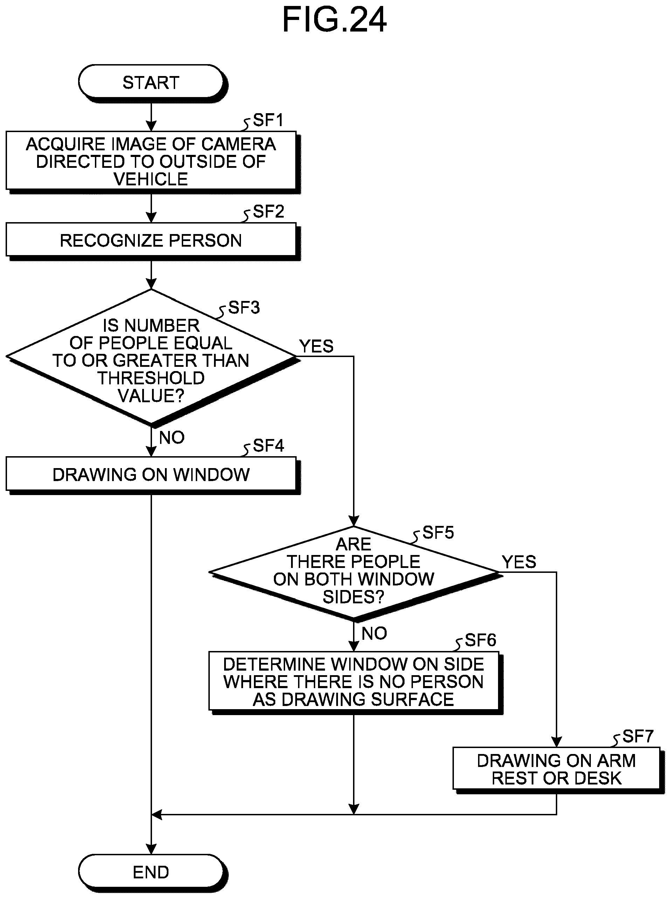

FIG. 24 is a diagram illustrating an example of a flow of the countermeasure against the visually induced motion sickness.

The monitor unit MU monitors a surrounding situation of the vehicle 1 using the camera 51 facing the outside of the vehicle (Step SF1). The environment information processing unit 91 detects one or more persons at a position serving as the background BG of the content CT based on a monitoring result, and supplies information on the number of persons and the positions of the persons to the optimization processing unit 92 (Step SF2).

The optimization processing unit 92 determines whether the number of people existing in the background BG is equal to or greater than a threshold value (Step SF3). When the number of people is less than the threshold value (Step SF3: No), the optimization processing unit 92 determines the window WD as the drawing position (Step SF4) .

When the number of people is equal to or greater than the threshold value (Step SF3: Yes), the optimization processing unit 92 determines whether there are people on both sides (right side and left side) of the vehicle 1 (Step SF5). When there is a person only on one side of the vehicle 1 (Step SF5: No), the optimization processing unit 92 determines the window WD on the side where there is no person as the drawing position (Step SF6). When there are persons on both sides of the vehicle 1 (Step SF5: Yes), the optimization processing unit 92 determines the arm rest AM or a desk installed in the vehicle as the drawing position (Step SF7).

### [7-5-2. Countermeasure against shape change of projection target]

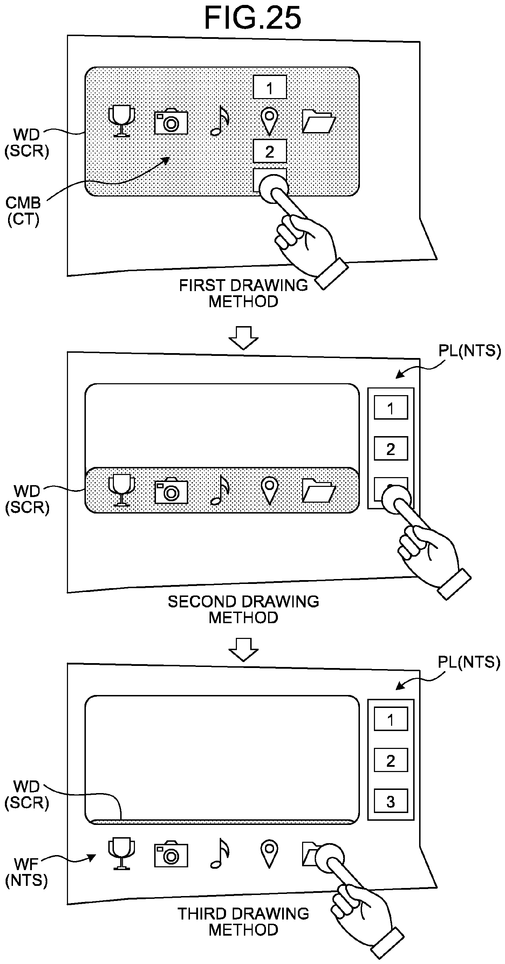

FIG. 25 is a diagram illustrating an example of changing the drawing method according to the viewing environment in the vehicle.

When the content CT is projected by the projector PJ, the maximum drawing size of the content CT is changed depending on a change in the shape of a projection target. For example, in a state where the window WD is half-opened, only the content CT having a half size as compared with a state in which the window WD is closed can be displayed on the window WD.

Therefore, when the shape of the projection target is changed while drawing is being performed at the optimum drawing position, the drawing position is changed depending on the amount of change in the shape of the projection target. For example, the optimization processing unit 92 determines, as the drawing position of a part or all of the content CT to be drawn on the transparent screen SCR, the non-transparent screen NTS based on the opening/closing amount of the window WD used as the transparent screen SCR.

In the example of FIG. 25, a cross media bar CMB is displayed as the content CT. The cross media bar CMB is a user interface (UI) that displays the icon group in which icons are arranged in the horizontal direction and the vertical direction separately for each function.

When the window WD is completely closed, a first drawing method of drawing the content CT on the window WD is adopted. When the window WD is not completely closed, a second drawing method of drawing the content CT on the window WD in the closed portion and/or the non-transparent screen NTS is adopted. When the window WD is fully open, a third drawing method of drawing the content CT on the non-transparent screen NTS is adopted.

In the example of FIG. 25, the content CT includes an icon group in which icons are arranged in the horizontal direction and the vertical direction. When the window WD is completely closed, all the icons of the icon group arranged in the horizontal direction and the vertical direction are drawn on the window WD. When the window WD is not completely closed, the icons of the icon group arranged in the horizontal direction are drawn in the horizontally long window WD in the half-open state, and the icons of the icon group arranged in the vertical direction are drawn in the vertically long pillar PL. When the window WD is fully open, the icons of the icon group arranged in the horizontal direction are drawn in the window frame WF in the horizontal direction, and the icons of the icon group arranged in the vertical direction are drawn in the vertically long pillar PL.

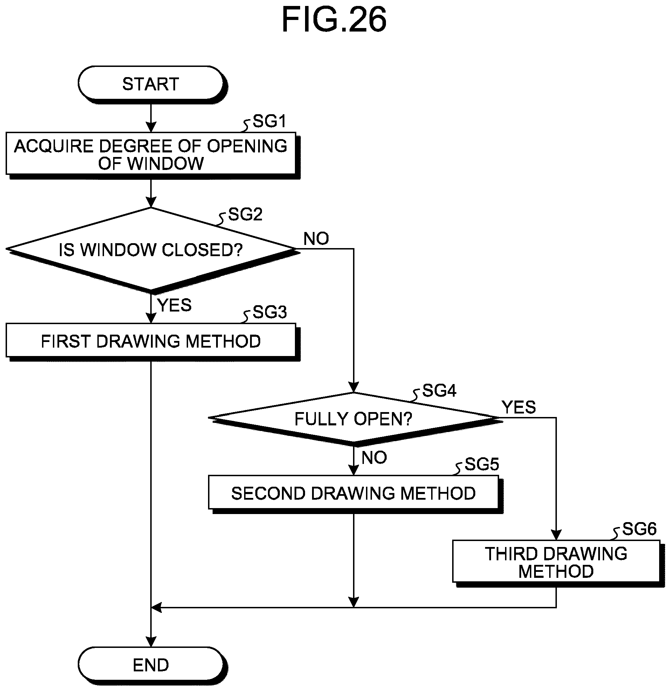

FIG. 26 is a diagram illustrating an example of a flow of a countermeasure against the opening and closing of the window WD.

The monitor unit MU monitors the open/close state of the window WD using the camera CM directed toward the inside of the vehicle. The environment information processing unit 91 acquires information on a degree of opening of the window WD based on a monitoring result and supplies the acquired information to the optimization processing unit 92 (Step SG1).

The optimization processing unit 92 determines whether the window WD is completely closed (Step SG2). When the window WD is completely closed (Step SG2: Yes), the optimization processing unit 92 adopts the first drawing method (Step SG3).

When the window WD is open (Step SG2: No), the optimization processing unit 92 determines whether the window WD is fully open (Step SG4). When the window WD is not fully opened (Step SG4: No), the optimization processing unit 92 adopts the second drawing method (Step SG5). When the window WD is fully open (Step SG4: Yes), the optimization processing unit 92 adopts the third drawing method (Step SG6).

### [7-6. Determination of drawing method without prediction]

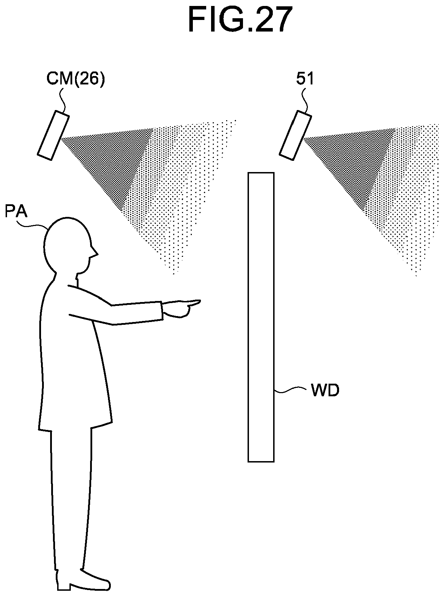

FIG. 27 is a diagram illustrating determination processing of a drawing method without prediction of a transition of the environment outside the vehicle.

The optimization processing unit 92 can also determine the drawing method at the current position based on the environment outside the vehicle at the current position without predicting the transition of the environment outside the vehicle. When the prediction does not need to be performed, the landscape LS outside the vehicle or a color of a material of the non-transparent screen NTS is monitored in real time by a camera (the camera CM, the camera 51) installed inside or outside the vehicle, whereby the background color COL1 can be accurately detected and the drawing color COL2 having high distinguishability can be determined.

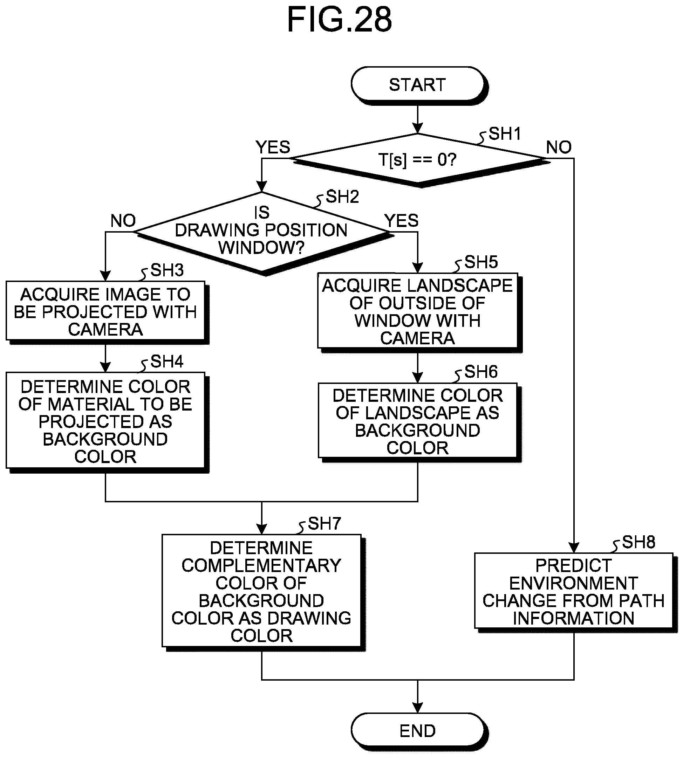

FIG. 28 is a flowchart illustrating the determination processing of the drawing method without prediction of the transition of the environment outside the vehicle.

The optimization processing unit 92 determines whether a prediction period is 0 (Step SH1). When the prediction period is not 0 (Step SH1: No), the optimization processing unit 92 predicts a transition of an environment outside a vehicle based on path information, and determines a drawing method based on a prediction result (Step SH8). When the prediction period is 0 (Step SH1: Yes), the optimization processing unit 92 determines whether a drawing position is the window WD (Step SH2).

When the drawing position is not the window WD (Step SH2: No), the optimization processing unit 92 acquires a captured image of the non-transparent screen NTS to be projected from the camera CM (Step SH3). The optimization processing unit 92 detects a color of a material of the non-transparent screen NTS from the captured image of the camera CM. The optimization processing unit 92 sets the detected color of the material as the background color COL1 (Step SH4), and sets a complementary color of the background color COL1 as a drawing color (Step SH7).

When the drawing position is the window WD (Step SH2: Yes), the optimization processing unit 92 acquires a captured image of the landscape LS outside the window WD from the camera 51 (Step SH5). The optimization processing unit 92 detects a color of the landscape LS of a portion superimposed on the content CT from the captured image of the camera 51. The optimization processing unit 92 sets the detected color of the landscape LS as the background color COL1 (Step SH6), and sets the complementary color of the background color COL1 as the drawing color (Step SH7).

### [7-7. Determination of drawing color in consideration of content]

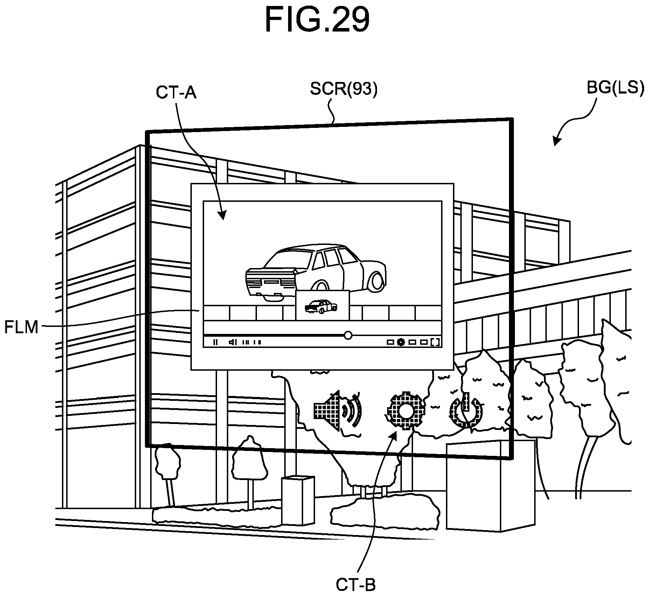

FIG. 29 is a diagram illustrating the determination method of the drawing color COL2 in consideration of the content CT.

There is the content CT such as a movie in which the intention of a content creator may be changed when the drawing color COL2 is changed. Regarding the content CT, distinguishability from the background BG can be enhanced by drawing a frame FLM without changing the drawing color.

FIG. 29 illustrates a moving image content such as a movie as an example of the above-described content CT. The moving image content includes a main video CT-A and an icon group CT-B. The icon group CT-B is used to perform reproduction, stop, volume adjustment, setting change, and the like of the main video CT-A.

A color of the main video CT-A cannot be changed. Therefore, the optimization processing unit 92 superimposes the frame FLM surrounding the main video CT-A on the background BG and then displays the frame FLM. A color of the frame FLM may be any color as long as the color has high distinguishability from the background BG. The frame FLM may be displayed in a single color or in multiple colors. The shape of the frame FLM is also set according to the shape of an object to be surrounded, and any shape such as a circle or a square is possible. In the example of FIG. 29, the monochromatic rectangular frame FLM that rims the main video CT-A is displayed.

A color of the icon group CT-B can be changed. Therefore, the optimization processing unit 92 enhances distinguishability from the background BG by setting the appropriate drawing color COL2 depending on the background color COL1. In the example of FIG. 29, the icon group CT-B is superimposed on a tree (green leaf). Therefore, the optimization processing unit 92 recognizes the background color COL1 as a green color and sets the drawing color COL2 as a pink color (a complementary color of the green color).

### [7-8. Response to light source other than sun]

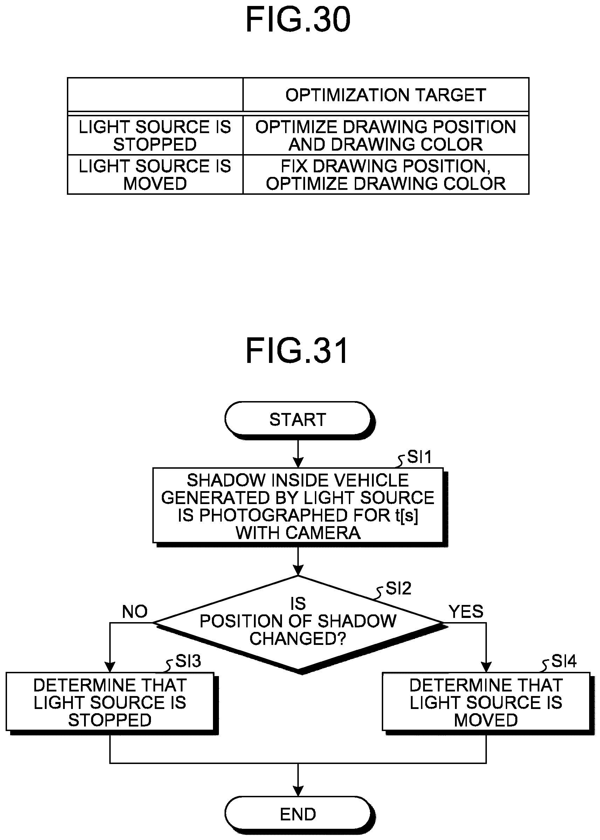

FIG. 30 is a diagram illustrating response to a light source other than the sun SN.

Similar optimization can be performed even in the presence of a light source (such as a tunnel light or a street lamp) other than the sun SN. That is, upon determining that the light source enters the field of view of the passenger PA through the transparent screen SCR, the optimization processing unit 92 can determine, as a drawing position of a part or all of the content CT, a position on the transparent screen SCR, in which the position does not overlap the light source, or the non-transparent screen NTS. Accordingly, visibility of the content CT is enhanced.

However, when the light source frequently moves within the field of view of the passenger PA, the drawing position of the content CT is also frequently changed in accordance with the movement of the light source. Therefore, there is a possibility that usability deteriorates or visually induced motion sickness occurs. Therefore, the optimization processing unit 92 varies the optimization method of the drawing method depending on a movement situation of the light source. For example, when the light source is stopped in the field of view of the passenger PA, the optimization processing unit 92 optimizes both the drawing position and the drawing color by the above-described method. When the light source is moving within the field of view of the passenger PA, the optimization processing unit 92 fixes the drawing position and optimizes the drawing color. Whether the light source is moving is determined based on, for example, a moving situation of a shadow inside the vehicle caused by the light source.

FIG. 31 is a flowchart illustrating determination processing of the drawing method based on the movement situation of the light source.

First, the shadow inside the vehicle generated by the light source is photographed for t seconds by the camera CM (Step SI1). A photographing time (t seconds) is freely and selectively set as a time at which the movement situation of the shadow can be determined. The environment information processing unit 91 calculates a moving speed of the shadow based on a video of the shadow (a visible light video) acquired from the camera CM and supplies the moving speed to the optimization processing unit 92.

The optimization processing unit 92 determines whether the position of the shadow is changing based on the moving speed of the shadow (Step SI2). For example, when the moving speed of the shadow is equal to or greater than a threshold value, it is determined that the position of the shadow is changing. When the moving speed of the shadow is less than the threshold value, it is determined that the position of the shadow is not changing.

When the position of the shadow is not changing (Step SI2: No), the optimization processing unit 92 determines that the light source is stopped, and optimizes only the drawing color of the content CT by the above-described method (Step SI3). When the position of the shadow is changing (Step SI2: Yes), the optimization processing unit 92 determines that the light source is moving, and optimizes both the drawing position and the drawing color of the content CT by the above-described method (Step SI4).

### [8. Effects]

The processing unit 90 includes the environment information processing unit 91 and the optimization processing unit 92. The environment information processing unit 91 predicts the transition of the environment outside the vehicle while the content CT is being viewed. The optimization processing unit 92 determines the drawing method of the content CT based on the predicted transition of the environment outside the vehicle. In the information processing method of the present disclosure, the processing of the processing unit 90 is executed by a computer. The program of the present disclosure causes the computer to implement processing of the processing unit 90. The vehicle control system 11 of the present disclosure includes the video display unit 93 that draws the content CT based on the drawing method determined by a processing unit 90.

According to this configuration, an appropriate drawing method in consideration of a change in the environment outside the vehicle is determined. Therefore, the visibility of the content CT is less likely to deteriorate due to a change in the environment outside the vehicle.

The environment information processing unit 91 generates the environment information indicating a prediction result of the environment outside the vehicle for each time. The optimization processing unit 92 determines the drawing condition according to the predicted environment outside the vehicle for each time, and determines the drawing method based on a statistical result of the drawing condition for each time.

According to this configuration, the drawing method is less likely to be frequently changed due to the change in the environment outside the vehicle.

The environment information includes information on a traveling position, weather at the traveling position, a traveling direction, and a peripheral map outside the vehicle.

According to this configuration, the drawing method is optimized based on the traveling landscape and the weather transition.

The drawing condition includes the drawing position and the drawing color COL2.

According to this configuration, the drawing position and the drawing color COL2 are prevented from being frequently changed due to the change in the environment outside the vehicle.

The optimization processing unit 92 aggregates a plurality of drawing positions calculated for each time and calculates the expression frequency for each drawing position. The optimization processing unit 92 determines the drawing position having the highest expression frequency as the optimum drawing position. The optimization processing unit 92 extracts one or more times at which the drawing position is the optimum drawing position. The optimization processing unit 92 aggregates the drawing colors COL2 at the extracted one or more times and calculates the expression frequency of each drawing color COL2. The optimization processing unit 92 determines the drawing color COL2 having the highest expression frequency as the optimum drawing color. The optimization processing unit 92 determines, as the drawing method of the content CT, a drawing method having the optimum drawing position and the optimum drawing color as an optimum drawing condition.

According to this configuration, the optimum drawing method is determined according to the drawing position and the expression frequency of the drawing color COL2 calculated for each time.

The optimization processing unit 92 detects, as the background BG of the content CT, the non-transparent screen NTS, which is a drawing target of the content CT, or the landscape LS outside the vehicle seen through the transparent screen SCR, which is a drawing target of the content CT. The optimization processing unit 92 determines the drawing color COL2 based on the color of the background BG.

According to this configuration, the content CT is better identified from the background BG.

Upon determining that sunlight does not directly reach the content drawing position of the non-transparent screen NTS based on the environment information, the optimization processing unit 92 determines, as the color of the background BG, a color having luminance lower than luminance of a color of a material of the non-transparent screen NTS at the content drawing position.

According to this configuration, the appropriate drawing color COL2 is determined in consideration of the color of the material of the non-transparent screen NTS serving as a drawing target.

Upon determining that daylight directly reaches the content drawing position of the non-transparent screen NTS based on the environment information, the optimization processing unit 92 determines, as the color of the background BG, a color having luminance higher than luminance of the color of the material of the non-transparent screen NTS at the content drawing position.

According to this configuration, the appropriate drawing color COL2 is determined in consideration of the brightness of direct sunlight (daylight) at the content drawing position.

Upon determining that the rising sun or the setting sun directly reaches the content drawing position of the non-transparent screen NTS based on the environment information, the optimization processing unit 92 determines an orange color as the color of the background BG.

According to this configuration, the appropriate drawing color COL2 is determined in consideration of the color (the orange color) of the rising sun or the setting sun.

The optimization processing unit 92 detects the landscape LS outside the vehicle to be the background BG of the content CT based on the traveling position, the traveling direction, and the peripheral map outside the vehicle.

According to this configuration, the landscape LS outside the vehicle is better estimated.

The optimization processing unit 92 determines a complementary color of the color of the background BG as the drawing color COL2.

According to this configuration, the content CT is better identified from the background BG.

Upon determining that the sun SN does not enter the field of view of the passenger PA through the transparent screen SCR based on the environment information, the optimization processing unit 92 determines the transparent screen SCR as the drawing position of the content CT.

According to this configuration, deterioration in visibility due to direct view of the sun SN is suppressed.

Upon determining that the sun SN enters the field of view of the passenger PA through the transparent screen SCR based on environment information, the optimization processing unit 92 determines, as a drawing position of a part or all of the content CT, a position on the transparent screen SCR that does not overlap the sun SN or the non-transparent screen NTS.

According to this configuration, the content CT is presented at a position where the sun SN is not directly viewed.

For example, upon determining that the crowd CW outside the vehicle enters the field of view of the passenger PA through the specific transparent screen SCR, the optimization processing unit 92 determines, as a drawing position of a part or all of the content CT, the transparent screen SCR other than the specific transparent screen SCR or the non-transparent screen NTS.

According to this configuration, deterioration in visibility due to the content CT being superimposed on the crowd CW is suppressed.

The optimization processing unit 92 determines, as a drawing position of a part or all of the content CT to be drawn on the transparent screen SCR, the non-transparent screen NTS based on the opening/closing amount of the window WD used as the transparent screen SCR.

According to this configuration, the visibility of the content CT hardly deteriorates due to the opening and closing of the window WD.

A prediction period during which the transition of the environment outside the vehicle is predicted is defined for each content CT.

According to this configuration, an appropriate prediction period according to the content CT is set.

The prediction period is set based on a standard time at which the content CT is gazed.

According to this configuration, the drawing method is hardly changed during the viewing of the content CT.

It is noted that the effects described in the present specification are merely examples and are not limited, and other effects may be obtained.

### [Supplementary note]

It is noted that the present technology can also have the following configurations.
(1) An information processing apparatus comprising:
   an environment information processing unit configured to predict a transition of an environment outside a vehicle during viewing of a content; and
   an optimization processing unit configured to determine a drawing method of the content based on the predicted transition of the environment outside the vehicle.
(2) The information processing apparatus according to (1), wherein:
   the environment information processing unit is configured to generate environment information indicating a prediction result of the environment outside the vehicle for each time; and
   the optimization processing unit is configured to determine, for each time, a drawing condition according to the predicted environment outside the vehicle, and to determine the drawing method based on a statistical result of the drawing condition for each time.
(3) The information processing apparatus according to (2), wherein the environment information includes information on a traveling position, weather at the traveling position, a traveling direction, and a peripheral map outside the vehicle.
(4) The information processing apparatus according to (2) or (3), wherein the drawing condition includes a drawing position and a drawing color.
(5) The information processing apparatus according to (4), wherein the optimization processing unit is configured to:
   aggregate a plurality of the drawing positions, each of the drawing positions being calculated for each time, and calculate an expression frequency of each of the drawing positions;
   determine, as an optimum drawing position, the drawing position having the highest expression frequency;
   extract one or more times at which the drawing position is the optimum drawing position;
   aggregate the drawing colors at the extracted one or more times and calculate the expression frequency of each of the drawing colors;
   determine, as an optimum drawing color, the drawing color having the highest expression frequency; and
   determine, as the drawing method of the content, the drawing method having the optimum drawing position and the optimum drawing color as optimum drawing conditions.
(6) The information processing apparatus according to (4) or (5), wherein the optimization processing unit is configured to detect, as a background of the content, a non-transparent screen serving as a drawing target of the content or a landscape outside the vehicle, wherein the landscape is seen through a transparent screen serving as a drawing target of the content, and to determine the drawing color based on a color of the background.
(7) The information processing apparatus according to (6), wherein the optimization processing unit is configured to determine, upon determining that sunlight does not directly reach a content drawing position of the non-transparent screen based on the environment information, a color having luminance lower than luminance of a color of a material of the non-transparent screen at the content drawing position as the color of the background.
(8) The information processing apparatus according to (6) or (7), wherein the optimization processing unit is configured to determine, upon determining that daylight directly reaches a content drawing position of the non-transparent screen based on the environment information, a color having luminance higher than luminance of a color of a material of the non-transparent screen at the content drawing position as the color of the background.
(9) The information processing apparatus according to any one of (6) to (8), wherein the optimization processing unit is configured to determine, upon determining that rising sun or setting sun directly reaches a content drawing position of the non-transparent screen based on the environment information, an orange color as the color of the background.
(10) The information processing apparatus according to any one of (6) to (9), wherein the optimization processing unit is configured to detect, based on a traveling position, a traveling direction, and a peripheral map outside the vehicle, the landscape outside the vehicle, wherein the landscape serves as the background of the content.
(11) The information processing apparatus according to any one of (6) to (10), wherein the optimization processing unit is configured to determine, as the drawing color, a complementary color of the color of the background.
(12) The information processing apparatus according to any one of (6) to (11), wherein the optimization processing unit is configured to determine, upon determining that sun does not enter a field of view of a passenger through the transparent screen based on the environment information, the transparent screen as the drawing position of the content.
(13) The information processing apparatus according to any one of (6) to (12), wherein the optimization processing unit is configured to determine, upon determining that sun enters a field of view of a passenger through the transparent screen based on the environment information, a position on the transparent screen, the position not overlapping the sun, or the non-transparent screen as the drawing position of a part or all of the content.
(14) The information processing apparatus according to any one of (6) to (13), wherein the optimization processing unit is configured to determine, upon determining that a crowd outside the vehicle enters a field of view of a passenger through a specific transparent screen, the transparent screen other than the specific transparent screen or the non-transparent screen as the drawing position of a part or all of the content.
(15) The information processing apparatus according to any one of (6) to (14), wherein the optimization processing unit is configured to determine, based on an opening/closing amount of a window used as the transparent screen, the non-transparent screen as the drawing position of a part or all of the content to be drawn on the transparent screen.
(16) The information processing apparatus according to any one of (1) to (15), wherein a prediction period during which the transition of the environment outside the vehicle is predicted is defined for each of the contents.
(17) The information processing apparatus according to (16), wherein the prediction period is set based on a standard time at which the content is gazed.
(18) An information processing method executed by a computer, the information processing method comprising:
   predicting a transition of an environment outside a vehicle during viewing of a content; and
   determining a drawing method of the content based on the predicted transition of the environment outside the vehicle.
(19) A program configured to cause a computer to implement:
   predicting a transition of an environment outside a vehicle during viewing of a content; and
   determining a drawing method of the content based on the predicted transition of the environment outside the vehicle.
(20) An information processing system comprising:
   the information processing apparatus according to any one of (1) to (17); and
   a video display unit configured to draw the content based on the drawing method determined by the information processing apparatus.

### Reference Signs List

11 VEHICLE CONTROL SYSTEM (INFORMATION PROCESSING SYSTEM)
90 PROCESSING UNIT (INFORMATION PROCESSING APPARATUS)
91 ENVIRONMENT INFORMATION PROCESSING UNIT
92 OPTIMIZATION PROCESSING UNIT
93 VIDEO DISPLAY UNIT
BG BACKGROUND
COL1 BACKGROUND COLOR
COL2 DRAWING COLOR
CT CONTENT
LS LANDSCAPE
NTS NON-TRANSPARENT SCREEN
PA PASSENGER
SCR TRANSPARENT SCREEN
SN SUN
WD WINDOW

## Claims

1. An information processing apparatus comprising:
an environment information processing unit configured to predict a transition of an environment outside a vehicle during viewing of a content; and
an optimization processing unit configured to determine a drawing method of the content based on the predicted transition of the environment outside the vehicle.

2. The information processing apparatus according to claim 1, wherein:
the environment information processing unit is configured to generate environment information indicating a prediction result of the environment outside the vehicle for each time; and
the optimization processing unit is configured to determine, for each time, a drawing condition according to the predicted environment outside the vehicle, and to determine the drawing method based on a statistical result of the drawing condition for each time.

3. The information processing apparatus according to claim 2, wherein the environment information includes information on a traveling position, weather at the traveling position, a traveling direction, and a peripheral map outside the vehicle.

4. The information processing apparatus according to claim 2, wherein the drawing condition includes a drawing position and a drawing color.

5. The information processing apparatus according to claim 4, wherein the optimization processing unit is configured to:
aggregate a plurality of the drawing positions, each of the drawing positions being calculated for each time, and calculate an expression frequency of each of the drawing positions;
determine, as an optimum drawing position, the drawing position having the highest expression frequency;
extract one or more times at which the drawing position is the optimum drawing position;
aggregate the drawing colors at the extracted one or more times and calculate the expression frequency of each of the drawing colors;
determine, as an optimum drawing color, the drawing color having the highest expression frequency; and
determine, as the drawing method of the content, the drawing method having the optimum drawing position and the optimum drawing color as optimum drawing conditions.

6. The information processing apparatus according to claim 4, wherein the optimization processing unit is configured to detect, as a background of the content, a non-transparent screen serving as a drawing target of the content or a landscape outside the vehicle, wherein the landscape is seen through a transparent screen serving as a drawing target of the content, and to determine the drawing color based on a color of the background.

7. The information processing apparatus according to claim 6, wherein the optimization processing unit is configured to determine, upon determining that sunlight does not directly reach a content drawing position of the non-transparent screen based on the environment information, a color having luminance lower than luminance of a color of a material of the non-transparent screen at the content drawing position as the color of the background.

8. The information processing apparatus according to claim 6, wherein the optimization processing unit is configured to determine, upon determining that daylight directly reaches a content drawing position of the non-transparent screen based on the environment information, a color having luminance higher than luminance of a color of a material of the non-transparent screen at the content drawing position as the color of the background.

9. The information processing apparatus according to claim 6, wherein the optimization processing unit is configured to determine, upon determining that rising sun or setting sun directly reaches a content drawing position of the non-transparent screen based on the environment information, an orange color as the color of the background.

10. The information processing apparatus according to claim 6, wherein the optimization processing unit is configured to detect, based on a traveling position, a traveling direction, and a peripheral map outside the vehicle, the landscape outside the vehicle, wherein the landscape serves as the background of the content.

11. The information processing apparatus according to claim 6, wherein the optimization processing unit is configured to determine, as the drawing color, a complementary color of the color of the background.

12. The information processing apparatus according to claim 6, wherein the optimization processing unit is configured to determine, upon determining that sun does not enter a field of view of a passenger through the transparent screen based on the environment information, the transparent screen as the drawing position of the content.

13. The information processing apparatus according to claim 6, wherein the optimization processing unit is configured to determine, upon determining that sun enters a field of view of a passenger through the transparent screen based on the environment information, a position on the transparent screen, the position not overlapping the sun, or the non-transparent screen as the drawing position of a part or all of the content.

14. The information processing apparatus according to claim 6, wherein the optimization processing unit is configured to determine, upon determining that a crowd outside the vehicle enters a field of view of a passenger through a specific transparent screen, the transparent screen other than the specific transparent screen or the non-transparent screen as the drawing position of a part or all of the content.

15. The information processing apparatus according to claim 6, wherein the optimization processing unit is configured to determine, based on an opening/closing amount of a window used as the transparent screen, the non-transparent screen as the drawing position of a part or all of the content to be drawn on the transparent screen.

16. The information processing apparatus according to claim 1, wherein a prediction period during which the transition of the environment outside the vehicle is predicted is defined for each of the contents.

17. The information processing apparatus according to claim 16, wherein the prediction period is set based on a standard time at which the content is gazed.

18. An information processing method executed by a computer, the information processing method comprising:
predicting a transition of an environment outside a vehicle during viewing of a content; and
determining a drawing method of the content based on the predicted transition of the environment outside the vehicle.

19. A program configured to cause a computer to implement:
predicting a transition of an environment outside a vehicle during viewing of a content; and
determining a drawing method of the content based on the predicted transition of the environment outside the vehicle.

20. An information processing system comprising:
the information processing apparatus according to claim 1; and
a video display unit configured to draw the content based on the drawing method determined by the information processing apparatus.
